# EUROPEAN PATENT APPLICATION

(11) **EP 4 145 914 A1**
(43) Date of publication of application: **08.03.2023**
(21) Application number: 21796539.1
(22) Date of filing: 25.04.2021
(51) Int. Cl.: H04W 52/02, H04W 76/28

(54) **DOWNLINK RECEPTION TRIGGERING METHOD, AND TERMINAL AND NETWORK SIDE DEVICE**

(30) Priority: 30.04.2020 CN 202010368256
(71) Applicant: Vivo Mobile Communication Co., Ltd., Dongguan, Guangdong 523863 (CN)
(72) Inventor: LI, Dongru, Dongguan, Guangdong 523863 (CN); WU, Yumin, Dongguan, Guangdong 523863 (CN); PAN, Xueming, Dongguan, Guangdong 523863 (CN); SUN, Xiaodong, Dongguan, Guangdong 523863 (CN)
(74) Representative: Chas. Hude A/S
(86) International application number: PCT/CN2021/089617
(87) International publication number: WO 2021/218855

(57) **Abstract**

The present invention provides a downlink reception triggering method, a terminal, and a network side device. The method on a terminal side includes: sending a first uplink signal, where the first uplink signal is used to trigger a first downlink reception. In the present invention, the terminal may trigger a corresponding downlink reception by sending an uplink signal. In this way, not only resource consumption of the terminal can be reduced to facilitate energy saving of the terminal, but also flexibility and efficiency of performing a downlink reception by the terminal can be improved. The present invention can be applied to but is not limited to an XR application scenario. When the present invention is applied to an XR application scenario, a service requirement of an XR terminal can be better met, and a requirement of an XR user can be better met.

## Description

### CROSS-REFERENCE TO RELATED APPLICATIONS

This application claims priority to Chinese Patent Application No. 202010368256.3, filed on April 30, 2020 in China, which is incorporated herein by reference in its entirety.

### TECHNICAL FIELD

The present invention relates to the field of communications technologies, and in particular, to a downlink reception triggering method, a terminal, and a network side device.

### BACKGROUND

In a mobile communications system, a conventional transmission manner is a scheduling-based transmission manner. For example, a terminal first obtains, by monitoring a physical downlink control channel (Physical Downlink Control Channel, PDCCH), a time-frequency domain resource that is of a downlink reception and that is allocated by a network side device to the terminal, and then performs a downlink reception on the corresponding resource.

In an actual application scenario, scheduling-based transmission is not necessarily the most efficient. Taking extended reality (Extended reality, XR) as an example, XR refers to real-and-virtual combined environments and human-machine interactions generated by using a computer technology and a wearable device. In an XR application scenario, a data resource required by a user may be predicted according to an action of the user. However, the terminal performs a downlink reception based on dynamic scheduling of the network side device, which is inflexible and inefficient, and cannot better meet a service requirement of an XR terminal and cannot be applied to an XR service model.

### SUMMARY

Embodiments of the present invention provide a downlink reception triggering method, a terminal, and a network side device, to resolve a prior-art problem that flexibility and efficiency of performing a downlink reception by a terminal according to dynamic scheduling of a network side device are relatively low.

To resolve the foregoing problem, the present invention is implemented as follows:

According to a first aspect, an embodiment of the present invention provides a downlink reception triggering method. The method is applied to a terminal and includes:
sending a first uplink signal, where the first uplink signal is used to trigger a first downlink reception, an association relationship between the first uplink signal and the first downlink reception includes a first association relationship, and the first association relationship is an association relationship between the first uplink signal and the first downlink reception in frequency domain.

According to a second aspect, an embodiment of the present invention provides a downlink reception triggering method. The method is applied to a network side device and includes:
receiving a first uplink signal, where the first uplink signal is used to trigger a first downlink reception, an association relationship between the first uplink signal and the first downlink reception includes a first association relationship, and the first association relationship is an association relationship between the first uplink signal and the first downlink reception in frequency domain.

According to a third aspect, an embodiment of the present invention provides a terminal, including:
a first sending module, configured to send a first uplink signal, where the first uplink signal is used to trigger a first downlink reception, an association relationship between the first uplink signal and the first downlink reception includes a first association relationship, and the first association relationship is an association relationship between the first uplink signal and the first downlink reception in frequency domain.

According to a fourth aspect, an embodiment of the present invention provides a network side device, including:
a first receiving module, configured to receive a first uplink signal, where the first uplink signal is used to trigger a first downlink reception, an association relationship between the first uplink signal and the first downlink reception includes a first association relationship, and the first association relationship is an association relationship between the first uplink signal and the first downlink reception in frequency domain.

According to a fifth aspect, an embodiment of the present invention provides a terminal, including: a memory, a processor, and an instruction or a program that is stored in the memory and that can be run on the processor. When the instruction or the program is executed by the processor, the steps of the downlink reception triggering method provided in the first aspect in the embodiments of the present invention are implemented.

According to a sixth aspect, an embodiment of the present invention provides a network side device, including: a memory, a processor, and an instruction or a program that is stored in the memory and that can be run on the processor. When the instruction or the program is executed by the processor, the steps of the downlink reception triggering method provided in the second aspect in the embodiments of the present invention are implemented.

According to a seventh aspect, an embodiment of the present invention provides a readable storage medium. The readable storage medium stores an instruction or a program, and when the instruction or the program is executed by a processor, the steps of the downlink reception triggering method provided in the first aspect in the embodiments of the present invention are implemented.

According to an eighth aspect, an embodiment of the present invention provides a readable storage medium. The readable storage medium stores an instruction or a program, and when the instruction or the program is executed by a processor, the steps of the downlink reception triggering method provided in the second aspect in the embodiments of the present invention are implemented.

According to a ninth aspect, an embodiment of the present invention provides a chip. The chip includes a processor and a communications interface, the communications interface is coupled to the processor, and the processor is configured to run a program or an instruction to implement the downlink reception triggering method in the first aspect.

According to a tenth aspect, an embodiment of the present invention provides a chip. The chip includes a processor and a communications interface, the communications interface is coupled to the processor, and the processor is configured to run a program or an instruction to implement the downlink reception triggering method in the second aspect.

According to an eleventh aspect, an embodiment of this application provides a computer program product. The program product is stored in a non-volatile storage medium, and the program product is executed by at least one processor to implement steps of the downlink reception triggering method provided in the first aspect or the second aspect in the embodiments of the present invention.

In the embodiments of the present invention, the terminal may trigger a corresponding downlink reception by sending an uplink signal. In this way, not only resource consumption of the terminal can be reduced to facilitate energy saving of the terminal, but also flexibility and efficiency of performing a downlink reception by the terminal can be improved. The embodiments of the present invention can be applied to but is not limited to an XR application scenario. When the embodiments of the present invention are applied to an XR application scenario, a service requirement of an XR terminal can be better met, and a requirement of an XR user can be better met.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may obtain other accompanying drawings from these accompanying drawings without creative efforts.
FIG. 1 is a structural diagram of a network system according to an embodiment of the present invention;
FIG. 2 is a schematic diagram of a DRX cycle according to an embodiment of the present invention;
FIG. 3 is a flowchart of a downlink reception triggering method according to an embodiment of the present invention;
FIG. 4 to FIG. 11 are example diagrams according to an embodiment of the present invention;
FIG. 12 is a flowchart of another downlink reception triggering method according to an embodiment of the present invention;
FIG. 13 is a schematic structural diagram of a terminal according to an embodiment of the present invention;
FIG. 14 is a schematic structural diagram of a network side device according to an embodiment of the present invention;
FIG. 15 is a schematic diagram of a hardware structure of a terminal according to an embodiment of the present invention; and
FIG. 16 is a schematic diagram of a hardware structure of a network side device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some rather than all of the embodiments of the present invention. All other embodiments obtained by a person of ordinary skill in the art based on the embodiments of the present invention without creative efforts shall fall within the protection scope of the present invention.

The term "include" and any other variants in the specification and claims of this application mean to cover the non-exclusive inclusion, for example, a process, method, system, product, or device that includes a list of steps or units is not necessarily limited to those steps or units, but may include other steps or units not expressly listed or inherent to such a process, method, product, or device. In addition, in the specification and claims, "and/or" is used to indicate at least one of connected objects. For example, A and/or B represents the following three cases: Only A is included, only B is included, and both A and B exist. Similarly, at least one of A and B indicates three cases: only A, only B, and both A and B.

In the embodiments of the present invention, the word such as "example" or "for example" is used to represent giving an example, an illustration, or a description. Any embodiment or design scheme described as an "example" or "for example" in the embodiments of the present invention should not be explained as being more preferred or having more advantages than another embodiment or design scheme. Exactly, use of the term "example" or "for example" is intended to present a concept in a specific manner.

The embodiments of the present invention are described below with reference to the accompanying drawings. The embodiments provided in the present invention may be applied to a wireless communications system. The wireless communications system may be a 5G system, an evolved Long Term Evolution (Evolved Long Term Evolution, eLTE) system, or a subsequent evolved communications system.

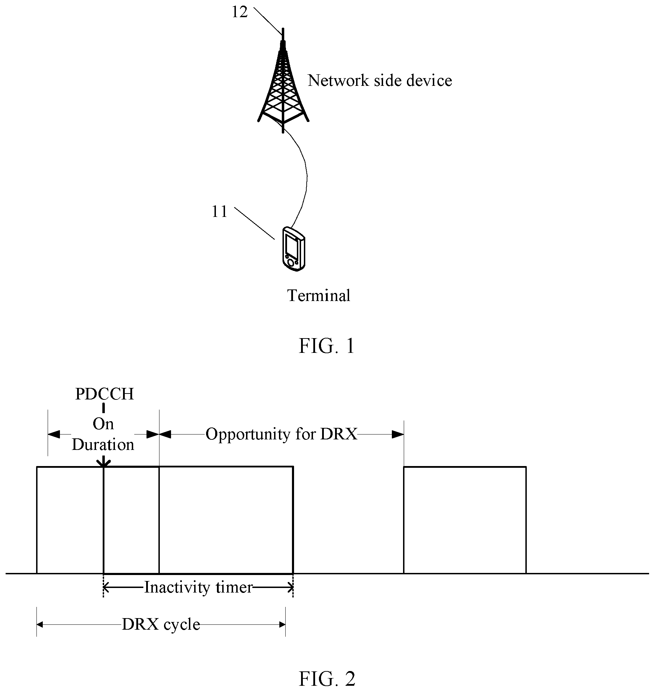

FIG. 1 is a structural diagram of a network system according to an embodiment of the present invention. As shown in FIG. 1, the system includes a terminal 11 and a network side device 12. The terminal 11 may be a mobile communications device such as a mobile phone, a tablet personal computer (Tablet Personal Computer), a laptop computer (Laptop Computer), a personal digital assistant (personal digital assistant, PDA for short), a mobile Internet device (Mobile Internet Device, MID), or a wearable device (Wearable Device). It should be noted that a specific type of the terminal 11 is not limited in this embodiment of the present invention. The network side device 12 may be a 5G network side device (for example, a gNB or a 5G NR NB), a 4G network side device (for example, an eNB), a 3G network side device (for example, an NB), a network side device in a subsequent evolved communications system, or the like. It should be noted that a specific type of the network side device 12 is not limited in this embodiment of the present invention.

To better understand the technical solutions in the embodiments of the present invention, before the technical solutions in the embodiments of the present invention are described, related technologies in the embodiments of the present invention are generally described.

### I. XR service

XR refers to all real-and-virtual combined environments and human-computer interactions generated by using a computer technology and a wearable device, including representative forms such as augmented reality (Augmented Reality, AR), mediated reality (Mediated Reality, MR), and virtual reality (Virtual Reality, VR), and interpolation areas between them. Levels of the virtual world range from partial sensory input to fully immersive virtual reality. A key of XR is expansion of human experience, especially experience related to sense of presence (represented by VR) and cognitive acquisition (represented by AR).

In an application scenario of XR, in virtual reality experience, a user may obtain information of a new angle of view by performing actions such as turning the head. In this case, the head-turning action of the XR user may be notified to a network side device by sending an uplink signal by using a terminal. After receiving the uplink signal, the network side device schedules required downlink data for the XR user for use.

In an XR (not excluding NR light) application scenario, a downlink reception is triggered by an uplink signal. In the prior art, this mechanism of triggering the downlink reception by the uplink signal is not supported. Therefore, resource consumption of the terminal is relatively large, flexibility of performing a downlink reception by the terminal is relatively poor, and a service requirement of an XR terminal cannot be better met, and consequently a service requirement of an XR user cannot be better met.

### II. CDRX (Discontinuous reception (Discontinuous Reception, DRX) of a radio resource control (Radio Resource Control, RRC) connected state)

As shown in FIG. 2, a DRX cycle includes "on duration (On Duration)" and "opportunity for DRX (Opportunity for DRX)". In the "on duration", a terminal monitors and receives a PDCCH, and in the "opportunity for DRX", the terminal does not monitor the PDCCH to reduce power consumption. In a case that a newly transmitted PDCCH is received in the on duration, an inactivity timer (inactivity timer) is started or restarted to prolong duration of monitoring the PDCCH by the terminal.

It should be noted that a "timer" in this application may also be referred to as a "timing device", that is, a meaning represented by the "timer" in this application is the same as or similar to a meaning represented by the "timing device".

A system may separately configure a short DRX cycle (short DRX cycle) or a long DRX cycle (long DRX cycle) for the terminal according to different service scenarios. In a case that both a short cycle and a long cycle are configured, switching between the long cycle and the short cycle may be performed in a specified manner.

In view of this, the embodiments of the present invention provide a method for triggering a downlink reception by using an uplink signal, that is, the downlink reception triggering method provided in the embodiments of the present invention.

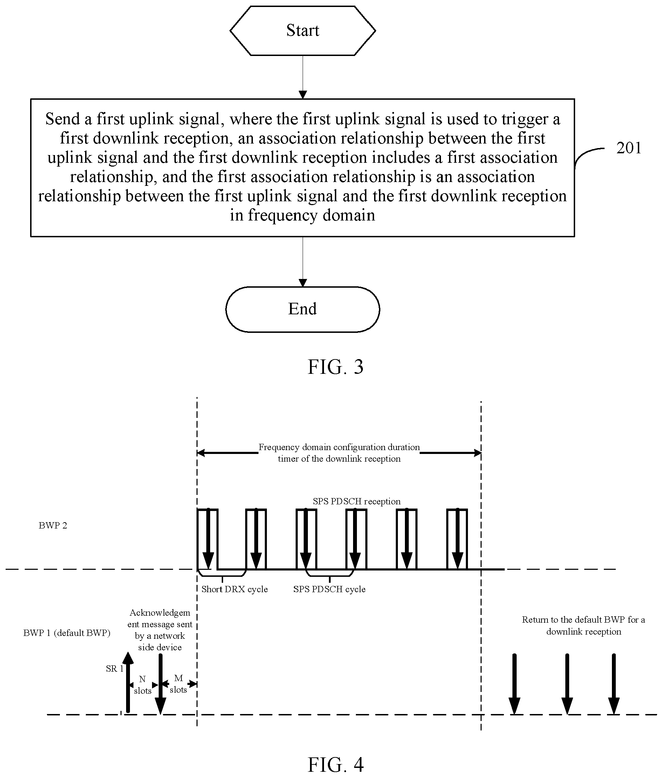

FIG. 3 is a flowchart of a downlink reception triggering method according to an embodiment of the present invention. As shown in FIG. 3, the downlink reception triggering method is applied to a terminal, and the method includes the following steps.

Step 201: Send a first uplink signal, where the first uplink signal is used to trigger a first downlink reception, an association relationship between the first uplink signal and the first downlink reception includes a first association relationship, and the first association relationship is an association relationship between the first uplink signal and the first downlink reception in frequency domain.

In this embodiment of the present invention, the terminal may directly trigger the first downlink reception by sending the first uplink signal, without a process such as configuring the first downlink reception by a network side device. Therefore, the first downlink reception is triggered by sending the first uplink signal, which is different from an existing downlink scheduling and downlink reception manner.

The first downlink reception is triggered by sending the first uplink signal, which is different from triggering a downlink reception in an existing scheduling-based transmission manner. In the existing scheduling-based transmission manner, for example, the terminal obtains, by monitoring a PDCCH, a time-frequency domain resource that is of a downlink reception and that is allocated by the network side device to the terminal, and then the terminal performs a downlink reception on the corresponding resource. In this embodiment of the present invention, the terminal triggers the first downlink reception by sending the first uplink signal. Configuration parameters such as a time-frequency domain resource of the first downlink reception and duration of the first downlink reception may be preconfigured by the network side device or carried by using the first uplink signal, and a downlink reception may be triggered without a scheduling process. Therefore, the first downlink reception is triggered by sending the first uplink signal, thereby improving flexibility and efficiency of a downlink reception.

That the first uplink signal is used to trigger the first downlink reception may be understood as an association relationship between the first uplink signal and the first downlink reception.

In this embodiment of the present invention, the association relationship between the first uplink signal and the first downlink reception includes the first association relationship, and the first association relationship is an association relationship between the first uplink signal and the first downlink reception in frequency domain.

The association relationship between the first uplink signal and the first downlink reception in frequency domain may be understood as an association relationship between the first uplink signal and the first downlink reception in a frequency domain configuration parameter. After sending the first uplink signal, the terminal may monitor or receive the first downlink reception according to the association relationship in the frequency domain configuration parameter.

In an embodiment, the first downlink reception is explicitly configured by using a resource configuration parameter carried in the first uplink signal, and the network side device sends the first downlink reception according to the configuration parameter indicated by the received first uplink signal. For example, after sending the first uplink signal, the terminal monitors the first downlink reception in a discontinuous reception manner. In addition, the first downlink reception may include a plurality of downlink receptions. In other words, the resource configuration parameter corresponding to the first downlink reception is different from a downlink reception resource configuration parameter configured by the network side device according to an uplink signal such as an RACH or a BFR sent by the terminal.

In this embodiment of the present invention, the association relationship between the first uplink signal and the first downlink reception may further include a second association relationship, and the second association relationship is an association relationship between the first uplink signal and the first downlink reception in time domain. In this way, the association relationship between the first uplink signal and the first downlink reception may include the first association relationship, or may include the first association relationship and the second association relationship. That is, the association relationship between the first uplink signal and the first downlink reception may be an association relationship in frequency domain, or may be an association relationship in time-frequency domain. The association relationship between the first uplink signal and the first downlink reception in time-frequency domain may be understood as an association relationship between the first uplink signal and the first downlink reception in a time-frequency domain configuration parameter. After sending the first uplink signal, the terminal may monitor or receive the first downlink reception according to the association relationship in the time-frequency domain configuration parameter.

The association relationship between the first uplink signal and the first downlink reception may be established in advance. For example, the association relationship between the first uplink signal and the first downlink reception may be preconfigured by the network side device, or the association relationship between the first uplink signal and the first downlink reception may be pre-stipulated by a protocol.

On the basis of establishing the association relationship between the first uplink signal and the first downlink reception in advance, that the first uplink signal is used to trigger the first downlink reception may be understood as that the first uplink signal is used to activate the first downlink reception that has an association relationship with the first uplink signal. More specifically, the first uplink signal is used to activate the first downlink reception in a corresponding resource configuration parameter.

It should be noted that, in a case that the "association relationship between the first uplink signal and the first downlink reception" in this embodiment of the present invention is not specifically limited to an association relationship in frequency domain (that is, the first association relationship) or an association relationship in time-frequency domain (that is, the first association relationship and the second association relationship), any association relationship may be applicable.

The first downlink reception may include one or more (including two) downlink receptions. When the first downlink reception includes a plurality of downlink receptions, each downlink reception may correspond to one downlink reception type. When the first downlink reception includes one downlink reception, the downlink reception may correspond to one downlink reception type or may not correspond to a specific type.

The first downlink reception may include at least one of a downlink scheduling information reception, a downlink signal reception, a downlink data information reception, and a downlink channel monitoring.

That is, a type of first downlink reception may include at least one of downlink scheduling information, a downlink signal, downlink data sending information, and downlink channel monitoring. The downlink scheduling information may be, for example, a PDCCH. DCI in the PDCCH may be scrambled by a specific radio network temporary identifier, such as a cell radio network temporary identifier (Cell Radio Network Temporary Identifier, C-RNTI) or a configurable scheduling RNTI (Configured Scheduling RNTI, CS-RNTI). A DCI format of the PDCCH may be, for example, DCI 1-1, DCI 0-1, DCI 0-0, DCI 1-0, DCI 1-2, or DCI 0-2. The downlink signal may be, for example, a channel state information reference signal (Channel State Information Reference Signal, CSI-RS), a CSI interference measurement (CSI Interference Measurement, CSI-IM), a reference signal (Time Reference Signals, TRS), a phase tracking reference signal (Phase-tracking reference signal, PTRS), a positioning reference signal (Positioning Reference Signals, PRS), or a synchronization signal block (Synchronization Signal and PBCH block, SSB). The downlink data sending information may be, for example, a physical downlink shared channel (Physical Downlink Shared Channel, PDSCH) reception of semi-persistent scheduling (Semi-Persistent Scheduling, SPS). The downlink channel monitoring may be, for example, a non-scheduled PDCCH or a group common PDCCH (group common PDCCH). Another downlink channel or downlink signal is not excluded.

A type of the first uplink signal may include at least one of a type of an uplink channel and a type of signaling or a signal carried on the uplink channel. The type of the uplink channel may be a physical uplink control channel (Physical Uplink Control Channel, PUCCH), a PUSCH (for example, a PUSCH of a configured uplink grant), or a physical random access channel (Physical Random Access Channel, PRACH) (for example, a Msg1, a MsgA PRACH, a MsgA PUSCH, or a Msg3). A periodicity of the foregoing uplink channel may be periodic, aperiodic, or semi-persistent. The type of the signaling or the signal carried on the uplink channel may be uplink control information (Uplink Control Information, UCI), a scheduling request (scheduling request, SR), channel state information (Channel State Information, CSI), a hybrid automatic repeat request (Hybrid Automatic Repeat Request, HARQ), a Media Access Control (Media Access Control, MAC) CE, a sounding reference signal (Sounding Reference Signal, SRS), or the like. Another uplink channel or uplink signal is not excluded.

In this embodiment of the present invention, the first downlink reception may be triggered by using the first uplink signal in an implicit indication manner, or the first downlink reception may be triggered by using the first uplink signal in an explicit indication manner.

The following describes the implicit indication manner.

Optionally, the association relationship between the first uplink signal and the first downlink reception is configured by the network side device or stipulated by the protocol.

In a case that the association relationship between the first uplink signal and the first downlink reception includes the first association relationship, the first association relationship may be configured by the network side device or stipulated by the protocol. In a case that the association relationship between the first uplink signal and the first downlink reception includes the first association relationship and the second association relationship, both the first association relationship and the second association relationship may be configured by the network side device or stipulated by the protocol.

Optionally, the method further includes:
triggering, according to at least one of a frequency range of the first uplink signal, a type of the first uplink signal, a logical channel on which the first uplink signal is located, and a service priority of the first uplink signal, the first downlink reception associated with the first uplink signal.

In this implementation, different downlink receptions may be associated by using frequency ranges of different uplink signals, or different downlink receptions may be associated by using types of different uplink signals, or different downlink receptions may be associated by using service types of different uplink signals, or different downlink receptions may be associated by using logical channels on which different uplink signals are located.

The frequency range of the first uplink signal may include a band (band), a bandwidth part (bandwidth Part, BWP), and a frequency (FR) range.

For example, in a case that a logical channel 1 sent on an uplink BWP 1 is associated with a downlink reception 1 on a downlink BWP 1, the downlink reception 1 on the BWP 1 is implicitly activated as long as the terminal sends, on the BWP 1, an uplink signal corresponding to the logical channel 1. In this example, the first uplink signal is the uplink signal corresponding to the logical channel 1 sent on the BWP 1, and the first downlink reception is the downlink reception 1 on the BWP 1.

The foregoing is an implementation in which the first uplink signal triggers the first downlink reception in the implicit indication manner.

The following describes the explicit indication manner.

Optionally, the first uplink signal includes first indication information, and the first indication information is used to trigger the first downlink reception.

The first indication information may include an identifier of the first downlink reception, may include a frequency domain configuration parameter (or a time-frequency domain configuration parameter) of the first downlink reception, or may include an identifier and a frequency domain configuration parameter (or a time-frequency domain configuration parameter) that are of the first downlink reception. For example, the terminal may send uplink control signaling (such as a MAC CE or UCI), and the uplink control signaling may explicitly indicate the first downlink reception triggered or activated by the uplink control signaling.

The first downlink reception triggered by the first indication information may be preconfigured by the network side device, or may be pre-stipulated by the protocol. For example, the first downlink reception triggered by the first indication information may be configured by using RRC. The first downlink reception triggered by the first indication information may include one or more downlink receptions, or the first indication information may trigger a plurality of first downlink receptions.

Optionally, the first indication information is used to trigger M downlink receptions in N downlink receptions, the N downlink receptions are configured by the network side device or stipulated by the protocol, the first downlink reception includes the M downlink receptions, and both N and M are integers greater than or equal to 1.

For example, the N downlink receptions are configured by using RRC, the first uplink signal includes the first indication information, and the first indication information is used to trigger or activate the M downlink receptions in the N downlink receptions, where the M downlink receptions are the first downlink reception, or the M downlink receptions are respectively M first downlink receptions.

Optionally, in a case that M is greater than 1, the method further includes:
after the first uplink signal is sent, receiving first downlink control information (Downlink Control Information, DCI); and
triggering K downlink receptions in the M downlink receptions by using the first DCI, where the first downlink reception includes the K downlink receptions, and K is an integer greater than or equal to 1.

For example, the N downlink receptions are configured by using RRC, the first uplink signal includes the first indication information, and the first indication information is used to trigger or activate the M downlink receptions in the N downlink receptions. In downlink receptions, the K downlink receptions in the M downlink receptions are dynamically triggered or activated by receiving DCI.

The foregoing is an implementation in which the first uplink signal triggers the first downlink reception in the explicit indication manner.

Optionally, the frequency domain configuration parameter (or the time-frequency domain configuration parameter) of the first downlink reception is configured by the network side device or stipulated by the protocol.

The following describes a related implementation of the frequency domain configuration parameter of the first downlink reception.

Optionally, the frequency domain configuration parameter of the first downlink reception includes at least one of the following:
a frequency domain location of the first downlink reception;
a first timer of the first downlink reception, where a BWP in which the first downlink reception is located remains unchanged during running of the first timer;
a carrier;
a BWP;
a control resource set (control resource set, CORESET);
a search space group;
a search space;
a parameter set;
a BWP bandwidth;
a virtual resource block (Virtual resource block, VRB) to a physical resource block (physical resource block, PRB) resource mapping manner;
a PRB bundle size;
a frequency domain resource allocation type, including a type 0 and a type1;
the number of transmit antennas or transmit channels;
the number of downlink multiple-input multiple-output (Multi Input Multi Output, MIMO) layers;
simultaneously activated downlink component carriers;
a maximum supported downlink transmission rate;
a quasi co-located (Quasi co-located, QCLed) type D (Type D) of a PDCCH;
an antenna port of the PDCCH;
an antenna port of a PDSCH;
multiple transmission and reception point (Multiple Transmission and Reception Point, MTRP) transmission; and
a precoding resource block group (Precoding Resource block Group, PRG) size.

Optionally, the frequency domain location of the first downlink reception is indicated by a bitmap; or
the frequency domain location of the first downlink reception is indicated by a frequency domain start location and a frequency domain duration length.

For example, assuming that a frequency domain resource indication method of a PDCCH is a type 0, a resource block group (Resource block group, RBG) in which a PDSCH is located may be indicated based on a bitmap (bitmap). For another example, assuming that a frequency domain resource indication method of a PDCCH is a type 1, a frequency domain location in which a PDSCH is located and a frequency domain duration length may be indicated in a form of start+length.

In addition, frequency domain location information of the first downlink reception may be further obtained according to the first uplink signal.

In this embodiment of the present invention, frequency domain duration corresponding to the first downlink reception may be configured by using the foregoing first timer, and the BWP in which the first downlink reception is located remains unchanged during running of the first timer.

The following describes a related implementation of the first timer.

Optionally, the first timer starts after a random access (Random Access Channel, RACH) process ends; or
the first timer starts after the terminal receives an acknowledgment message of the network side device.

In this implementation, the terminal may start the first timer after the RACH process ends, or may start the first timer after receiving the acknowledgment message of the network side device.

For the RACH process, the acknowledgment message of the network side device may be a Msg4 or a MsgB (both are PDCCHs scrambled by using a C-RNTI).

Optionally, the method further includes:
in a case that the terminal sends a second uplink signal during running of the first timer of the first downlink reception, and the second uplink signal is used to trigger a second downlink reception, starting or restarting the first timer after sending the second uplink signal; or
in a case that the terminal receives a first message sent by the network side device, starting or restarting the first timer, where the first message includes a BWP switching instruction.

In this implementation, in a case that in a downlink reception process configured in frequency domain, another uplink signal triggers a new downlink reception configured in frequency domain, the terminal may restart the first timer. In a case that the terminal receives a BWP switching indication sent by the network side device, the terminal may also restart the first timer.

Optionally, the method further includes at least one of the following:
in a case that the terminal triggers a third downlink reception by using a third uplink signal, stopping the first timer after the third downlink reception takes effect; and
in a case that a second message sent by the network side device is received, and the second message is used to instruct to stop the first timer, stopping the first timer.

In this implementation, in a case that the terminal triggers a new downlink reception to be effective by using another uplink signal, the terminal may stop the timer. In a case that the terminal receives an instruction that is sent by the network side device to stop a timer, the terminal may also stop the timer.

Optionally, in a case that the first timer times out, the method further includes:
switching the BWP in which the first downlink reception is located to a first BWP; or
deactivating the BWP in which the first downlink reception is located.

In this implementation, in a case that the timer times out, the terminal may switch or change the BWP in which the first downlink reception is located to a specific BWP, or may deactivate the BWP in which the first downlink reception is located. The first BWP may be a dormant (dormant) BWP, a non-dormant (non-dormant) BWP, a default (default) BWP, a first active (first active) BWP, or any one BWP.

In addition, when changing the frequency range, the terminal may further stop a previously running BWP inactivity timer (BWP inactivity timer), to prevent the terminal from returning to the default BWP due to timeout of the BWP inactivity timer.

Optionally, the method further includes:
switching a BWP in which the first uplink signal is located to an uplink BWP corresponding to the BWP to which the first downlink reception is switched.

In this implementation, the terminal may trigger or activate or change an uplink frequency configuration corresponding to a downlink reception of a specified frequency configuration, that is, a frequency domain change of the downlink reception may reversely affect frequency domain of an uplink signal. For example, in a case that the first uplink signal triggers switching to a downlink BWP 1 for a first downlink reception, the terminal may also correspondingly switch to the uplink BWP 1.

In addition, after receiving the acknowledgement message sent by the network side device, the terminal may perform a frequency domain information change on a downlink reception according to an instruction. For example, the frequency domain information change may be BWP switching.

Optionally, the method further includes:
sending second indication information to a network side device on the BWP to which the first uplink signal is switched, where the second indication information is used to indicate that switching occurs in the BWP in which the first uplink signal is located.

In this implementation, the terminal may send indication information on a changed uplink frequency domain configuration, where the indication information is used to notify the network side device that a frequency change occurs. For example, after the terminal sends an uplink signal on a specified uplink frequency band to indicate downlink reception of a specified frequency domain configuration, the terminal triggers an RACH process. The second indication information herein may be the same indication information as the foregoing first indication information, or may be different indication information.

As described above, in a case that the association relationship between the first uplink signal and the first downlink reception further includes the second association relationship, a time domain configuration parameter of the first downlink reception may also be configured by the network side device or stipulated by the protocol. The following describes a related implementation of the time domain configuration parameter of the first downlink reception.

Optionally, the time domain configuration parameter of the first downlink reception includes at least one of the following:
a time domain start moment of the first downlink reception;
a time domain monitoring manner of the first downlink reception;
duration of the first downlink reception; and
a parameter of a first cycle of the first downlink reception, where the parameter of the first cycle includes at least one of a length of the first cycle, an active time length of the first cycle, and an active time start location offset of the first cycle.

Optionally, the time domain start moment of the first downlink reception is any one of the following:
a reference moment, where the reference moment is an end moment of a time domain resource in which the first uplink signal is located;
a first moment, where the first moment is a moment at a first time interval from the reference moment;
a start moment of a first available downlink time domain resource after the reference moment;
a time domain resource start moment after a second timer times out, where the second timer starts at the reference moment;
a start moment of a first available downlink time domain resource after the first moment; and
a start moment of a first available downlink time domain resource after the second timer times out.

The time domain start moment of the first downlink reception may be the end moment of the time domain resource in which the first uplink signal is located. That is, the terminal may start to perform the first downlink reception immediately after sending the first uplink signal.

The time domain start moment of the first downlink reception may be alternatively the first moment, and a time interval between the first moment and the end moment of the time domain resource in which the first uplink signal is located is the first time interval. That is, after sending the first uplink signal, the terminal may start to perform the first downlink reception after the first time interval, and the first time interval may be configured by the network side device or stipulated by the protocol. Further, the network side device may configure a plurality of parameters of the first time interval, and the terminal may carry an indication of the first time interval in the first uplink signal. For example, the first time interval may be equal to a time interval K1 between a PDSCH and a HARQ-ACK feedback of the PDSCH, and a value set of K1 is preconfigured by the network side device; or the first time interval may be equal to a time interval between sending a beam failure recovery request (BFRQ) and receiving a beam failure recovery response (BFRR); or the first time interval may be equal to a time interval between sending an RACH and receiving an RAR response.

The time domain start moment of the first downlink reception may be alternatively the start moment of the first available downlink time domain resource after the end moment of the time domain resource in which the first uplink signal is located. That is, the terminal may start to perform the first downlink reception on the first available downlink time domain resource after sending the first uplink signal, and the downlink time domain resource may be a downlink subframe (DL subframe), a DL slot, a DL slot including a CORESET, or the like.

The time domain start moment of the first downlink reception may be alternatively the time domain resource start moment after the second timer times out, and the second timer is triggered at the end moment of the time domain resource in which the first uplink signal is located. That is, the terminal immediately triggers the second timer after sending the first uplink signal, and starts to perform the first downlink reception after the second timer times out.

The time domain start moment of the first downlink reception may be alternatively the start moment of the first available downlink time domain resource after the first moment. That is, after sending the first uplink signal, the terminal may start to perform the first downlink reception on the first available downlink time domain resource after the first time interval.

The time domain start moment of the first downlink reception may be alternatively the start moment of the first available downlink time domain resource after the second timer times out. That is, the terminal immediately triggers the second timer after sending the first uplink signal, and starts to perform the first downlink reception on the first available downlink time domain resource after the second timer times out.

For a value of the first time interval, the terminal may report a size of the first time interval according to a capability, or the protocol may stipulate a size of the first time interval according to different subcarrier space (subcarrier space, SCS) levels, or the terminal may report the first time interval. The value of the first time interval is not specifically limited.

In addition, in addition to the foregoing time domain start moment, the first uplink signal may further include location information of the start moment (for example, an offset is specified), and the time domain start moment of the first downlink reception is determined according to start moment information.

Optionally, the duration of the first downlink reception includes any one of first duration and duration of a third timer.

In this implementation, the duration of first downlink reception may be represented by using the first duration, and the first duration may be configured by the network side device or stipulated by the protocol. The duration of the first downlink reception may be alternatively represented by using the duration of the third timer, and the third timer may be configured by the network side device or stipulated by the protocol.

Optionally, the time domain monitoring manner of the first downlink reception includes at least one of the following:
monitoring the first downlink reception within the duration of the first downlink reception;
monitoring the first downlink reception within an active time of each first cycle; and
monitoring the first downlink reception within an active time of each first cycle within the duration of the first downlink reception.

In a case that the duration of the first downlink reception is configured, the terminal may monitor the first downlink reception within the duration of the first downlink reception, or the terminal may continuously perform the first downlink reception within the duration of the first downlink reception. For example, in a case that the duration of the first downlink reception is the first duration, the terminal may monitor the first downlink reception within the first duration. For another example, in a case that the duration of the first downlink reception is the duration of the third timer, the terminal may monitor the first downlink reception within the duration of the third timer, or the terminal may continuously perform the first downlink reception within the duration of the third timer. After the third timer times out, the terminal may exit the first downlink reception triggered by the first uplink signal. In a case that the terminal receives downlink scheduling information and/or downlink data sending information within the duration of the third timer, the terminal may restart the third timer.

The terminal may further monitor the first downlink reception in a discontinuous reception manner, that is, monitor the first downlink reception in a periodic time domain monitoring manner. For example, the terminal may monitor the first downlink reception within the active time of each first cycle. The first cycle includes an active time and an inactive time. The terminal only needs to receive or monitor the first downlink reception within the active time, and does not need to receive or monitor the first downlink reception within the inactive time. The discontinuous reception provided in this embodiment can further save energy of the terminal, and is a preferred time domain monitoring manner of the first downlink reception. The first cycle may be a long DRX cycle or a short DRX cycle. In a case that the first cycle is configured as a DRX cycle, a related timer and a parameter of the DRX cycle may be further applied to a downlink reception, for example, a DRX inactive timer (DRX-inactivity timer) in the DRX cycle.

The foregoing two time domain monitoring manners may be further combined. For example, the terminal may monitor the first downlink reception within the active time of each first cycle within the duration of the first downlink reception. In this manner, in a case that the duration of the first downlink reception is the first duration, the monitoring manner is: the terminal may monitor the first downlink reception within the active time of each first cycle within the first duration of the first downlink reception. In a case that the duration of the first downlink reception is the duration of the third timer, the monitoring manner is: the terminal may monitor the first downlink reception within the active time of each first cycle during running of the third timer of the first downlink reception. Further, after the duration of the first downlink reception ends, the terminal may no longer use the periodic downlink reception manner.

In addition, the first uplink signal may further carry a duration configuration of the first downlink reception.

Optionally, the method further includes:
stopping monitoring the first downlink reception in a case that Q downlink receptions in the first downlink reception are not received within an active time of L consecutive first cycles, where 1≤Q≤L, and both L and Q are integers greater than or equal to 1.

In this implementation, the case that the terminal periodically performs the first downlink reception means that the time domain monitoring manner is used through discontinuous reception. In a case that the terminal fails to receive downlink scheduling and/or downlink data within the active time of the L consecutive cycles, the terminal may exit the first downlink reception, or the terminal may exit the first downlink reception triggered by the first uplink signal.

For example, the terminal monitors the first downlink reception within the active time of each first cycle, and in a case that the terminal fails to receive two downlink receptions in the first downlink reception within an active time of three consecutive first cycles, the terminal stops monitors the first downlink reception. For another example, the terminal monitors the first downlink reception within the active time of each first cycle within the duration of the first downlink reception, and in a case that the terminal fails to receive one downlink reception in the first downlink reception within an active time of three first cycles within the duration of the first downlink reception, the terminal stops monitoring the first downlink reception.

In this implementation, energy of the terminal can be saved.

Optionally, the active time of the first cycle is indicated by using a bitmap.

The active time of the first cycle may be alternatively indicated by using duration.

For example, "11000" represents the first cycle, and each bit represents 2 ms. In this case, a length of the entire first cycle is 10 ms, the first two bits of 1 represent the active time of the first cycle and a length of the activate time is 4 ms, and the last three bits represent the inactive time of the first cycle and a length is 6 ms.

Optionally, in a case that the first downlink reception includes a PDCCH reception , the time domain configuration parameter of the first downlink reception includes at least one of the following:
a PDCCH blind detection parameter;
a PDCCH monitoring cycle;
a PDCCH monitoring offset;
PDCCH monitoring duration;
a CORESET;
a search space group;
a search space;
a DCI format;
a radio network temporary identifier (Radio Network Temporary Identity, RNTI);
a time interval between a PDCCH and a PDSCH scheduled by the PDCCH;
a time interval between a PDSCH and a hybrid automatic repeat request acknowledgement (Hybrid automatic repeat request acknowledgement, HARQ-ACK) feedback of the PDSCH;
a time interval between a PDCCH and a PUSCH scheduled by the PDCCH;
a PDSCH processing delay; and
a PUSCH preparation delay.

The PDCCH-related time interval may include K0, K1, and K2, and K0, K1, and K2 in unit of slot (slot). K0 is a time interval between a slot in which DCI (or a PDCCH corresponding to DCI) is located and a slot in which a PDSCH scheduled by the DCI is located, and K2 is a time interval between a slot in which DCI (or a PDCCH corresponding to DCI) is located and a slot in which a PUSCH scheduled by the DCI is located. For example, K0=0 indicates that a PDCCH and a PDSCH scheduled by the PDCCH are in one slot. K1 is a time interval between a slot in which a PDSCH is located and a slot in which a HARQ-ACK feedback of the PDSCH is located, that is, how many slots are shifted.

The PDSCH processing delay is a time interval between receiving a PDSCH and preparing to send a HARQ-ACK feedback corresponding to the PDSCH in the case of scheduling the PDSCH by a PDCCH. The PDSCH processing delay is different from K1, and K1 determines a specified slot on which a HARQ-ACK feedback is performed. However, the PDSCH processing delay means that after receiving a PDSCH, the terminal further needs to process the delay to prepare a HARQ feedback. That is, K1 must be greater than or equal to the PDSCH processing delay.

The PUSCH preparation delay means that after receiving a PDCCH, the terminal needs to prepare, at a time interval, for sending of a PUSCH scheduled by the PDCCH. The PUSCH preparation delay is different from K2, and K2 determines a specified slot on which a PUSCH is sent. However, the PUSCH preparation delay means that after receiving a PDCCH, the terminal still needs the preparation delay to be ready to send a PUSCH. That is, K2 must be greater than or equal to the PUSCH preparation delay.

It should be noted that any one or more of the time domain configuration parameter of the first downlink reception may be configured by the network side configuration or stipulated by the protocol together with other time domain configuration parameters. For example, any one or more or all of the time domain configuration parameter of the first downlink reception may be configured together with any one or more or all of the time domain start moment of the first downlink reception, the time domain monitoring manner, the duration, and the parameter of the first cycle parameter. In addition, any one or more or all of the time domain configuration parameter of the first downlink reception may be carried together with other time domain configuration parameters by using the first uplink signal.

Optionally, a mechanism of triggering the first downlink reception by the first uplink signal is configured for the terminal, a specific Media Access Control (Media Access Control, MAC) entity of the terminal, a specific service type of the terminal, or a specific frequency range of the terminal.

Alternatively, a mechanism of triggering the first downlink reception by the first uplink signal may be configured for a specific terminal, may be configured for a specific MAC entity (for example, a MAC entity of an SCG or a MAC entity of an MCG), may be configured for only a specific service type (for example, a specific logical channel (for example, a logical channel 1)), or may be configured for only a specific frequency range (for example, a cell 1 or a BWP 1). The frequency range may be a BWP, a serving cell, or a component carrier. In addition, an association relationship between an uplink signal of each service type and a downlink reception may be further configured for each service type, which means that related configuration parameters of the mechanism of triggering the first downlink reception by the first uplink signal may be the same or different. In addition, an association relationship between an uplink signal of each BWP and a downlink reception may be further configured for all BWPs of the terminal, which means that related configuration parameters of the mechanism of triggering the first downlink reception by the first uplink signal may be the same or different.

In this implementation, the mechanism of triggering the first downlink reception by the first uplink signal may be flexibly configured according to a specific requirement, so that flexibility of a downlink reception of the terminal can be improved.

Optionally, the method further includes:
receiving a third message sent by a network side device, where the third message is used to instruct the terminal to stop receiving at least one downlink reception in the first downlink reception.

In this implementation, the network side device may configure a stop mechanism for the first downlink reception triggered by the first uplink signal. For example, the network side device configures a stop command (for example, a MAC CE command or DCI), to stop any one or more downlink receptions or all downlink receptions in the first downlink reception that is currently being performed by the terminal. After receiving the first message sent by the network side device, the terminal may stop any one or more downlink receptions or all downlink receptions in the first downlink reception according to the instruction of the third message.

In this implementation, the terminal can stop, according to the instruction of the network side device, a downlink reception triggered by an uplink signal, thereby improving working performance and efficiency of a communications system.

Optionally, the method further includes:
receiving a fourth message sent by the network side device, where the fourth message is used to instruct the terminal to switch a receiving cycle of the first uplink reception from the first cycle to a second cycle, and the second cycle and the first cycle are different in at least one of a cycle length, an active time length of a cycle, and an active time start location offset of a cycle.

In this implementation, the network side device may configure a dual-cycle switching mechanism of the first downlink reception triggered by the first uplink signal. The dual-cycle switching mechanism is similar to a short DRX cycle (short DRX cycle) and long DRX cycle (long DRX cycle) switching mechanism. For example, the network side device may deliver a switching command (for example, a MAC CE command or DCI), to instruct the terminal to switch a discontinuous reception cycle of the first downlink reception.

After receiving the fourth message sent by the network side device, the terminal may switch the cycle of the first downlink reception from the first cycle to the second cycle according to the instruction of the fourth message. In this way, flexibility of the first downlink reception can be improved, and performance of a communications system can be improved.

Optionally, in a case that the terminal sends a second uplink signal within duration of the first downlink reception, and the second uplink signal is used to trigger a second downlink reception, the method further includes:
concurrently performing the first downlink reception and the second downlink reception; or
performing only the second downlink reception.

In this implementation, in a case that the terminal sends another uplink signal (the second uplink signal) to trigger the second downlink reception within the duration of the first downlink reception triggered by the first uplink signal (that is, the first downlink reception does not end). In this case, a downlink reception time configuration may include any one of the following:

First, the terminal concurrently performs downlink receptions triggered by a plurality of uplink signals, or the terminal concurrently monitors the first downlink reception and the second downlink reception. Each uplink signal triggers a monitoring configuration of one downlink reception. For example, each uplink signal triggers a new timer. The terminal needs to meet a monitoring configuration of a downlink reception triggered by any uplink signal.

Second, the terminal performs only a downlink reception triggered by a specified uplink signal, or the terminal may maintain only a monitoring configuration of a specified downlink reception. Each time the terminal sends a new uplink signal, the terminal may stop a current ongoing downlink reception, and start to perform a new downlink reception in a monitoring configuration of the new downlink reception. Certainly, each time the terminal sends a new uplink signal, the terminal may still continue the current ongoing downlink reception.

Optionally, in a case that the first downlink reception and the second downlink reception are concurrently performed, in a case that one or more resource conflicts occur on the first downlink reception and the second downlink reception, the method further includes:
performing the second downlink reception on a conflicted resource, and abandoning the first downlink reception; or
performing the first downlink reception on a conflicted resource, and abandoning the second downlink reception; or
on a conflicted resource, determining a to-be-performed downlink reception from the first downlink reception and the second downlink reception according to at least one of types of the first uplink signal and the second uplink signal, logical channels on which the first uplink signal and the second uplink signal are located, and service priorities of the first uplink signal and the second uplink signal.

The resource conflict includes at least one of a time domain resource conflict and a frequency domain resource conflict.

The following expression may be further used in this implementation:

In a case that the first downlink reception and the second downlink reception are concurrently performed, in a case that one or more resources conflict between the first downlink reception and the second downlink reception, the method further includes:
receiving a downlink signal that is in the second downlink reception and that conflicts with the first downlink reception, and abandoning receiving a downlink signal that is in the first downlink reception and that conflicts with the second downlink reception; or
receiving a downlink signal that is in the first downlink reception and that conflicts with the second downlink reception, and abandoning receiving a downlink signal that is in the second downlink reception and that conflicts with the first downlink reception; or
determining, according to at least one of a type of the first uplink signal, a logical channel on which the first uplink signal is located, a service priority of the first uplink signal, and at least one of a type of the second uplink signal, a logical channel on which the second uplink signal is located, and a service priority of the second uplink signal, a received downlink signal from the downlink signal that is in the first downlink reception and that conflicts with the second downlink reception.

In this implementation, when one or more resource conflicts occur between two downlink receptions, the terminal may preferentially receive a downlink signal of a downlink reception triggered later, and abandon receiving of a downlink signal of a downlink reception triggered earlier; or the terminal may preferentially receive a downlink signal of a downlink reception triggered earlier, and abandon receiving of a downlink signal of a downlink reception triggered later; or the terminal may determine, according to at least one of a type of an uplink signal, a logical channel on which the uplink signal is located, and a service priority of the uplink signal, a downlink signal that needs to be received, or determine a downlink signal whose receiving needs to be abandoned.

In this implementation, a resource conflict may be only a time domain resource conflict, only a frequency domain resource conflict, or a time-frequency domain resource conflict. A resource conflict is partial overlapping or all overlapping of time-frequency domain resources on which two or more downlink receptions are located.

It should be noted that the plurality of optional implementations in this embodiment of the present invention may be implemented in combination with each other, or may be separately implemented. This is not limited in this embodiment of the present invention.

To better understand the technical solutions in this embodiment of the present invention, the following provides two specific embodiments.

### Embodiment 1

In this embodiment, an uplink signal triggers a frequency domain information change of a downlink reception, and both a frequency domain configuration parameter and a time domain configuration parameter of the downlink reception are explicitly indicated by the uplink signal. The network side device configures a change in which frequency domain information of the downlink reception is a BWP and that is triggered by a scheduling request SR.

Example 1: As shown in FIG. 4, an SR 1 carries a BWP ID=2 indication of the downlink reception and a time domain configuration parameter indication of the downlink reception.

After receiving the SR 1, the network side device sends an acknowledgment message, such as DCI, to the terminal. The network side device configures a BWP 1 as a default BWP (default BWP) corresponding to a frequency domain configuration duration timer (timer) for which the uplink signal triggers the frequency domain information change of the downlink reception. After receiving the acknowledgement message, the terminal switches a current downlink BWP to a BWP 2 to perform a downlink reception process. The frequency domain configuration duration timer of the downlink reception is similar to a BWP-inactivity timer (BWP-inactivity timer). When the timer times out, the terminal may return to the default BWP for a normal downlink reception.

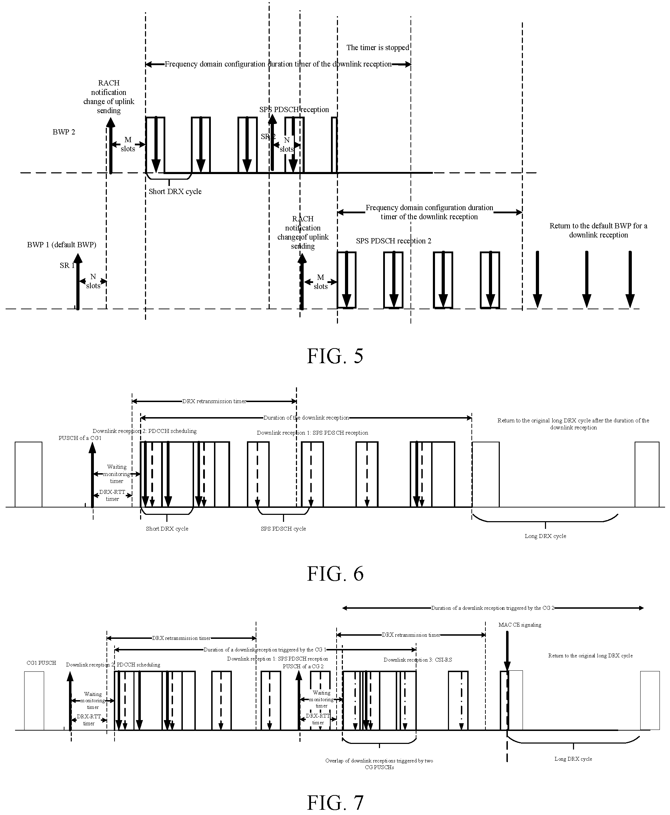

Example 2: As shown in FIG. 5, the network side device configures an association relationship between uplink frequency domain and downlink frequency domain.

The terminal triggers a downlink reception by sending an uplink SR 1 and a BWP change indication of the downlink reception, for example, a change from a downlink BWP to a BWP 2, and an uplink BWP may also be changed to the BWP 2. The terminal may send an acknowledgment change message on the uplink BWP 2. The message may be an RACH, to notify the network side device that the downlink BWP changes to the BWP 2. Then, a downlink reception process triggered by the SR 1 is performed.

In a case that the terminal triggers another downlink reception and a BWP change indication by using an uplink SR 2 in the downlink reception process, similarly, the terminal may also send an acknowledgment change message on a changed BWP, that is, the terminal may perform the foregoing acknowledgment process. After the acknowledgment process, the terminal may stop the downlink reception triggered by the current SR 1 and a corresponding frequency domain configuration duration timer. After the downlink reception triggered by the SR 2 takes effect, the terminal may switch to a downlink BWP 1 for a new downlink reception process, and may restart the frequency domain configuration duration timer until the timer times out, and then the terminal may return to the default BWP for an original downlink reception process.

In this embodiment, the time domain configuration information of the downlink reception process may be determined according to the following three specific embodiments.

### Embodiment a

As shown in FIG. 6 to FIG. 8, in this embodiment, the network side device preconfigures an association relationship between an uplink signal and a downlink reception, and completes, through an implicit indication, a process of triggering the downlink reception by the uplink signal. The mechanism of triggering the downlink reception by the uplink signal is configured for each logical channel. The uplink signal is triggered by a PUSCH of configured scheduling (CG), a time domain monitoring manner of the downlink reception is a discontinuous reception manner with a short DRX cycle, and a first timer at a start moment at which a network configures the related downlink reception has duration of a waiting monitoring timer and downlink reception=length of a delay budget (delay budget). The set of waiting monitoring timer and a retransmission timer that is configured by DRX and that is related to a HARQ process in DRX may be used together. The protocol specifies that a MAC CE command is used to forcibly stop all ongoing downlink receptions triggered by uplink signals.

The network side device preconfigures an association relationship between an uplink signal and a downlink reception. For example, a logical channel 1 is mapped to a PUSCH of a CG 1 and is associated with a downlink reception 1 and a downlink reception 2, and a logical channel 2 is mapped to a PUSCH of a CG 2 and is associated with a downlink reception 3.

Configuration information corresponding to the downlink reception 1 and the downlink reception 2 is basically the same: a same downlink reception time domain start moment, a same downlink reception monitoring configuration (using a short DRX cycle, a set of downlink reception waiting monitoring timer, and a delay budget). Downlink reception types of the two are different, where the downlink reception 1 is a reception of a semi-persistent SPS PDSCH, and the downlink reception 2 is DCI formats 1-2 and 0-2 scrambled by using a C-RNTI.

The waiting monitoring timer determines a time domain start moment of a downlink reception. A duration timer (valid duration) of the downlink reception is set to a delay budget. The current uplink CG is stopped immediately after timeout. A downlink reception-related waiting monitoring timer, a duration timer, a downlink DRX-HARQ round-trip delay timer (DRX-HARQ-RTT-TimerDL) in DRX, and a downlink DRX retransmission timer (DRX-RetransmissionTimerDL) may coexist.

In this embodiment, the terminal is configured with a long DRX cycle before not receiving the downlink reception triggered by the uplink signal.

After sending the PUSCH of the uplink CG 1, the terminal immediately triggers the "waiting monitoring timer". After the timer times out, the terminal immediately starts a short DRX cycle, and performs downlink scheduling (the downlink reception 2) and a reception of SPS downlink data (the downlink reception 1). In this embodiment, a short DRX cycle-related configuration is used for the downlink reception of the CG 1, for example, an X duration timer (DRX-ondurationtimer DR) and a DRX inactivity timer (DRX-inactivitytimer).

Configuration information corresponding to the downlink reception 3 is a periodic CSI-RS, and a same set of downlink reception waiting monitoring timer and a same delay budget as the downlink reception 1 and the downlink reception 2. In addition, a downlink reception is performed according to a configured monitoring cycle (the cycle is a newly defined cycle configuration, and is not a DRX cycle) within an active time of each cycle: Two slots are used a unit to indicate an active time location and a duration length " 11000" by using a bitmap, indicating that the first four slots are an active time, and the last six slots are an inactive time.

The terminal is originally configured with a long DRX cycle. The terminal sends the PUSCH of the uplink CG 1 (data of the logical channel 1) and/or the PUSCH of the CG 2 (data of the logical channel 2) to the network side device. With reference to the related configuration in this solution, a typical example of the solution in which the downlink reception is triggered by the uplink signal is provided.

Example 1: As shown in FIG. 6, only a PUSCH of one CG 1 triggers a downlink reception process, that is, a PUSCH of a separate CG 1 triggers a configuration of a downlink reception.

In FIG. 6, a dotted arrow indicates a downlink reception 1: an SPS PDSCH reception; and a solid arrow indicates a downlink reception 2: PDCCH scheduling.

Example 2: As shown in FIG. 7, in a case that another uplink CG 2 is sent within duration of a downlink reception triggered by an uplink CG 1 (that is, before the current downlink reception ends), only a monitoring configuration parallel method of downlink receptions triggered by a plurality of uplink signals is used. The network side device configures MAC CE signaling (MAC CE command) to stop the current ongoing downlink reception. That is, a plurality of CG PUSCHs overlap, a plurality of downlink reception configurations need to be met, and a MAC CE command is configured.

In FIG. 7, a dotted arrow indicates a downlink reception 1: an SPS PDSCH reception; a solid arrow indicates a downlink reception 2: PDCCH scheduling; and a dotted dash arrow indicates a downlink reception 3: a CSI-RS.

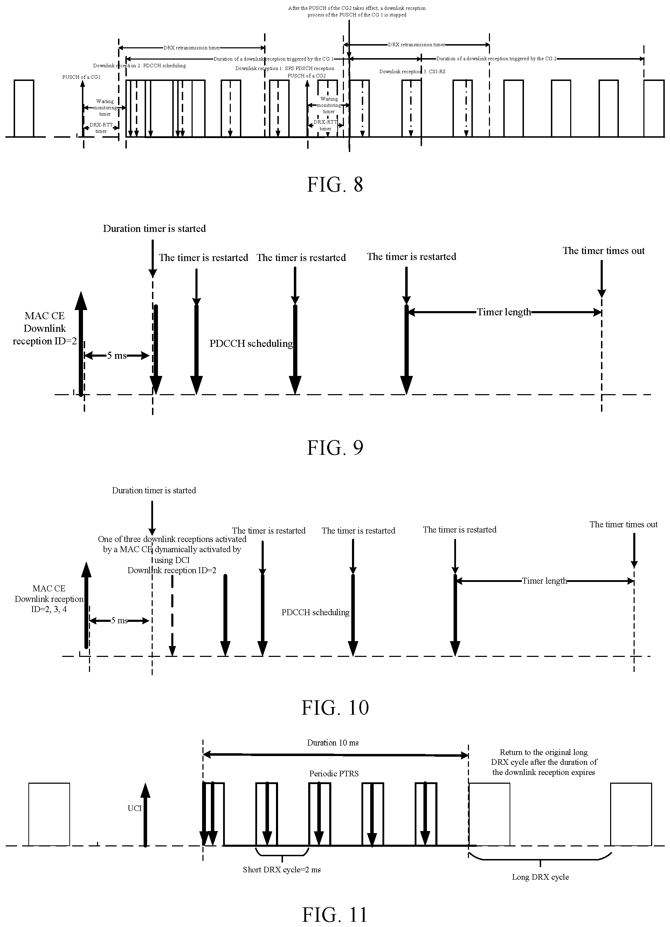

Example 3: As shown in FIG. 8, in a case that another uplink CG 2 is sent within duration of a downlink reception triggered by an uplink signal CG 1 (that is, before the current downlink reception ends), only a monitoring configuration method of a downlink reception triggered by one uplink signal is used, and no MAC CE command signaling is configured for the network side device. That is, a plurality of CG PUSCHs overlap, a previous downlink reception is stopped, a new downlink reception starts, and a MAC CE command is not configured.

In FIG. 8, a dotted arrow indicates a downlink reception 1: an SPS PDSCH reception; a solid arrow indicates a downlink reception 2: PDCCH scheduling; and a dotted dash arrow indicates a downlink reception 3: a CSI-RS.

### Embodiment b

In this embodiment, the terminal is not configured with a DRX mechanism before receiving a downlink reception triggered by an uplink signal. The terminal sends a MAC CE to the network side device, where the MAC CE carries an ID of the activated downlink reception.

Example 1: As shown in FIG. 9, RRC configures five downlink receptions, and numbers the five uplink receptions. The terminal sends uplink control signaling MAC CE to explicitly activate one of the downlink receptions: a downlink reception 2.

Example 2: As shown in FIG. 10, RRC configures five downlink receptions, and numbers the five uplink receptions. The terminal sends uplink control signaling MAC CE to explicitly activate three of the downlink receptions: downlink receptions 2, 3, and 4. After the downlink receptions are enabled, one of the three downlink receptions is dynamically activated by using DCI: a downlink reception 2.

Configuration information of the downlink reception 2 is: a type of the downlink reception being a group common PDCCH (group common PDCCH) scrambled by a C-RNTI, waiting monitoring duration N of the downlink reception, and a duration timer (timer). After the terminal ends sending of an uplink SR, after N symbols (symbol), N ms, or N slots, the duration timer is started and a downlink scheduling reception starts. In a case that a unit of N is symbol or slot, a value of N is related to an SCS configuration. In this example, N=5 ms. The timer is restarted after a downlink scheduling PDCCH is received within the duration timer. After the timer times out, this downlink reception exits.

### Embodiment c

This embodiment focuses on a method for triggering a downlink reception by an uplink signal: The downlink reception is trigger and separately configured by using uplink signaling UCI, where the mechanism of triggering the downlink reception by the uplink signal is configured for a specific BWP 1.

In this embodiment, the terminal is configured with a long DRX cycle before receiving the downlink reception triggered by the uplink signal. The terminal sends the uplink signaling UCI on the BWP 1, and explicitly carries, in the UCI, configuration information of the downlink reception triggered by the uplink signal: a time domain start moment of the downlink reception, a monitoring configuration of the downlink reception, duration of the downlink reception, and a type of the downlink reception.

As shown in FIG. 11, the time domain start moment of the downlink reception is a first DL slot including a CORESET after the UCI. The monitoring configuration of the downlink reception is: a short DRX cycle of 2 ms with an offset 0. The type of the downlink reception is a periodic PTRS. The duration of the downlink reception is 10 ms.

### Embodiment 2

In this embodiment, an uplink signal triggers a downlink reception of a specified frequency domain configuration.

That an uplink signal triggers a downlink reception of a specified frequency domain configuration is similar to the embodiment in which an uplink signal triggers a downlink reception of a specified time domain configuration. A difference is that frequency domain information of a downlink reception is configured. To avoid repetition, details are not described herein again.

The foregoing embodiments are merely exemplary descriptions, and are not intended to limit the embodiments of the present invention.

In the embodiments of the present invention, the terminal may trigger a corresponding downlink reception by sending an uplink signal. In this way, not only resource consumption of the terminal can be reduced to facilitate energy saving of the terminal, but also flexibility and efficiency of performing a downlink reception by the terminal can be improved. The embodiments of the present invention can be applied to but is not limited to an XR application scenario. When the embodiments of the present invention are applied to an XR application scenario, a service requirement of an XR terminal can be better met, and a requirement of an XR user can be better met.

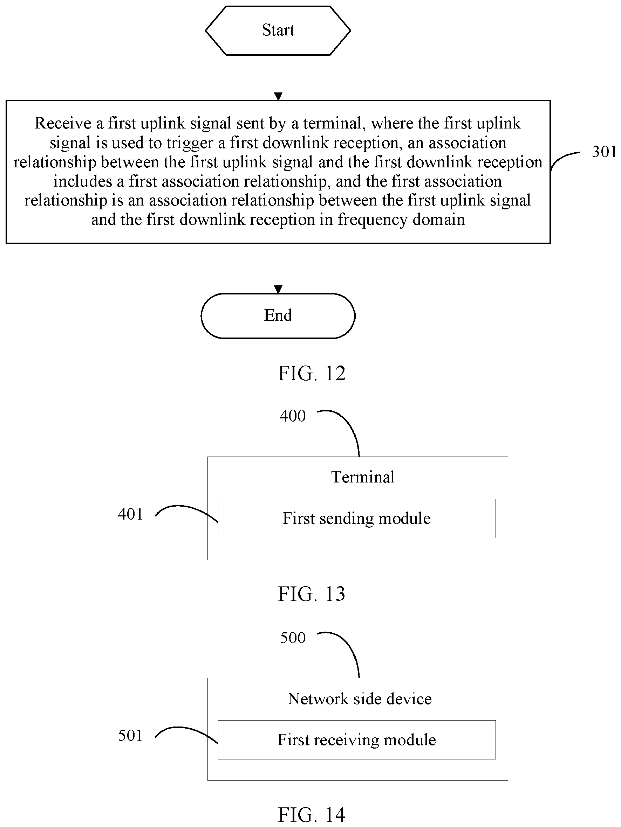

FIG. 12 is a flowchart of a downlink reception triggering method according to an embodiment of the present invention. As shown in FIG. 12, the downlink reception triggering method is applied to a network side device, and the method includes the following steps.

Step 301: receive a first uplink signal sent by a terminal, where the first uplink signal is used to trigger a first downlink reception, an association relationship between the first uplink signal and the first downlink reception includes a first association relationship, and the first association relationship is an association relationship between the first uplink signal and the first downlink reception in frequency domain.

Optionally, the association relationship is configured by the network side device or stipulated by a protocol.

Optionally, the first uplink signal includes first indication information, the first indication information is used to trigger M first downlink receptions in N downlink receptions, the N downlink receptions are configured by the network side device or stipulated by a protocol, and both N and M are integers greater than or equal to 1.

Optionally, the first indication information includes at least one of an identifier of the first downlink reception and a frequency domain configuration parameter of the first downlink reception.

Optionally, a frequency domain configuration parameter of the first downlink reception is configured by the network side device or stipulated by a protocol.

Optionally, the frequency domain configuration parameter of the first downlink reception includes at least one of the following:
a frequency domain location of the first downlink reception;
a first timer of the first downlink reception, where a BWP in which the first downlink reception is located remains unchanged during running of the first timer;
a carrier;
a bandwidth part BWP;
a control resource set CORESET;
a search space group;
a search space;
a parameter set;
a BWP bandwidth;
a virtual resource block VRB to physical resource block PRB resource mapping manner;
a PRB bundle size;
a frequency domain resource allocation type;
the number of transmit antennas or transmit channels;
the number of downlink multiple-input multiple-output MIMO layers;
simultaneously activated downlink component carriers;
a maximum supported downlink transmission rate;
a quasi co-located type D of a physical downlink control channel PDCCH;
an antenna port of the PDCCH;
an antenna port of a physical downlink shared channel PDSCH;
multiple transmission and reception point MTRP transmission; and
a precoding resource block group PRG size.

Optionally, the frequency domain location of the first downlink reception is indicated by a bitmap; or
the frequency domain location of the first downlink reception is indicated by a frequency domain start location and a frequency domain duration length.

Optionally, the first timer starts after a random access RACH process ends; or
the first timer starts after the terminal receives an acknowledgment message of the network side device.

Optionally, the method further includes:
sending a first message to the terminal, where the first message includes a BWP switching instruction.

Optionally, the method further includes:
sending a second message to the terminal, where the second message is used to instruct to stop the first timer.

Optionally, the method further includes:
receiving second indication information sent by the terminal, where the second indication information is used to indicate that switching occurs in an uplink BWP.

Optionally, the association relationship further includes a second association relationship, and the second association relationship is an association relationship between the first uplink signal and the first downlink reception in time domain.

Optionally, the association relationship is configured for at least one of a specific terminal, a specific Media Access Control MAC entity, a specific service type, and a specific frequency range.

Optionally, the type of the first uplink signal includes at least one of a type of an uplink channel and a type of a signal carried on the uplink channel.

Optionally, the first downlink reception includes at least one of a downlink scheduling information reception, a downlink signal reception, a downlink data information reception, and a downlink channel monitoring.

Optionally, the method further includes:
sending a third message to the terminal, where the third message is used to instruct the terminal to stop receiving at least one downlink reception in the first downlink reception.

It should be noted that this embodiment of the present invention is used as an embodiment of the network side device corresponding to the foregoing embodiment. For a specific implementation of this embodiment, refer to the related descriptions of the foregoing embodiment. A same beneficial effect can be achieved. To avoid repeated descriptions, details are not described herein again.

FIG. 13 is a structural diagram of a terminal according to an embodiment of the present invention. As shown in FIG. 13, a terminal 400 includes:
a first sending module 401, configured to send a first uplink signal, where the first uplink signal is used to trigger a first downlink reception, an association relationship between the first uplink signal and the first downlink reception includes a first association relationship, and the first association relationship is an association relationship between the first uplink signal and the first downlink reception in frequency domain.

Optionally, the association relationship is configured by a network side device or stipulated by a protocol.

Optionally, the terminal 400 further includes:
a first triggering module, configured to trigger, according to at least one of a frequency range of the first uplink signal, a type of the first uplink signal, a logical channel on which the first uplink signal is located, and a service priority of the first uplink signal, the first downlink reception associated with the first uplink signal.

Optionally, the first uplink signal includes first indication information, the first indication information is used to trigger M first downlink receptions in N downlink receptions, the N downlink receptions are configured by a network side device or stipulated by a protocol, and both N and M are integers greater than or equal to 1.

Optionally, in a case that M is greater than 1, the terminal 400 further includes:
a first receiving module, configured to: after the first uplink signal is sent, receive first downlink control information DCI; and
a second triggering module, configured to trigger K first downlink receptions in the M first downlink receptions by using the first DCI, where K is an integer greater than or equal to 1.

Optionally, the first indication information includes at least one of an identifier of the first downlink reception and a frequency domain configuration parameter of the first downlink reception.

Optionally, a frequency domain configuration parameter of the first downlink reception is configured by a network side device or stipulated by a protocol.

Optionally, the frequency domain configuration parameter of the first downlink reception includes at least one of the following:
a frequency domain location of the first downlink reception;
a first timer of the first downlink reception, where a BWP in which the first downlink reception is located remains unchanged during running of the first timer;
a carrier;
a bandwidth part BWP;
a control resource set CORESET;
a search space group;
a search space;
a parameter set;
a BWP bandwidth;
a virtual resource block VRB to physical resource block PRB resource mapping manner;
a PRB bundle size;
a frequency domain resource allocation type;
the number of transmit antennas or transmit channels;
the number of downlink multiple-input multiple-output MIMO layers;
simultaneously activated downlink component carriers;
a maximum supported downlink transmission rate;
a quasi co-located type D of a physical downlink control channel PDCCH;
an antenna port of the PDCCH;
an antenna port of a physical downlink shared channel PDSCH;
multiple transmission and reception point MTRP transmission; and
a precoding resource block group PRG size.

Optionally, the frequency domain location of the first downlink reception is indicated by a bitmap; or
the frequency domain location of the first downlink reception is indicated by a frequency domain start location and a frequency domain duration length.

Optionally, the first timer starts after a random access RACH process ends; or
the first timer starts after the terminal receives an acknowledgment message of the network side device.

Optionally, the terminal 400 further includes:
a first starting module, configured to: in a case that the terminal sends a second uplink signal during running of the first timer of the first downlink reception, and the second uplink signal is used to trigger a second downlink reception, start or restart the first timer after sending the second uplink signal; or
a second starting module, configured to: in a case that the terminal receives a first message sent by the network side device, start or restart the first timer, where the first message includes a BWP switching instruction.

Optionally, the terminal 400 further includes a stopping module, and the stopping module is configured to perform at least one of the following:
in a case that the terminal triggers a third downlink reception by using a third uplink signal, stopping the first timer after the third downlink reception takes effect; and
in a case that a second message sent by the network side device is received, and the second message is used to instruct to stop the first timer, stopping the first timer.

Optionally, in a case that the first timer times out, the terminal 400 further includes:
a first switching module, configured to switch the BWP in which the first downlink reception is located to a first BWP; or
a deactivation module, configured to deactivate the BWP in which the first downlink reception is located.

Optionally, the terminal 400 further includes:
a second switching module, configured to switch a BWP in which the first uplink signal is located to an uplink BWP corresponding to the BWP to which the first downlink reception is switched.

Optionally, the terminal 400 further includes:
a second sending module, configured to send second indication information to a network side device on the BWP to which the first uplink signal is switched, where the second indication information is used to indicate that switching occurs in an uplink BWP.

Optionally, the association relationship further includes a second association relationship, and the second association relationship is an association relationship between the first uplink signal and the first downlink reception in time domain.

Optionally, the association relationship is configured for at least one of a specific terminal, a specific Media Access Control MAC entity, a specific service type, and a specific frequency range.

Optionally, the type of the first uplink signal includes at least one of a type of an uplink channel and a type of a signal carried on the uplink channel.

Optionally, the first downlink reception includes at least one of a downlink scheduling information reception, a downlink signal reception, a downlink data information reception, and a downlink channel monitoring.

Optionally, the terminal 400 further includes:
a second receiving module, configured to receive a third message sent by a network side device, where the third message is used to instruct the terminal to stop receiving at least one downlink reception in the first downlink reception.

Optionally, in a case that the terminal sends a second uplink signal within duration of the first downlink reception, and the second uplink signal is used to trigger a second downlink reception, the terminal 400 further includes:
a first downlink reception module, configured to concurrently perform the first downlink reception and the second downlink reception; or
a second downlink reception module, configured to perform only the second downlink reception.

Optionally, in a case that the first downlink reception and the second downlink reception are concurrently performed, in a case that one or more resource conflicts occur on the first downlink reception and the second downlink reception, the terminal 400 further includes:
a third downlink reception module, configured to: perform the second downlink reception on a conflicted resource, and abandon the first downlink reception; or
a fourth downlink reception module, configured to: perform the first downlink reception on a conflicted resource, and abandon the second downlink reception; or
a determining module, configured to: on a conflicted resource, determine a to-be-performed downlink reception from the first downlink reception and the second downlink reception according to at least one of types of the first uplink signal and the second uplink signal, logical channels on which the first uplink signal and the second uplink signal are located, and service priorities of the first uplink signal and the second uplink signal.

Optionally, the first downlink reception includes a plurality of downlink receptions, and each downlink reception corresponds to one downlink reception type.

It should be noted that the terminal 400 in this embodiment of the present invention may be the terminal in any implementation in the method embodiment and any implementation of the terminal in the method embodiment may be implemented by the terminal 400 in this embodiment of the present invention, and a same beneficial effect is achieved. To avoid repetition, details are not described herein again.

FIG. 12 is a structural diagram of a network side device according to an embodiment of the present invention. As shown in FIG. 12, a network side device 500 includes:
a first receiving module 501, configured to receive a first uplink signal sent by a terminal, where the first uplink signal is used to trigger a first downlink reception, an association relationship between the first uplink signal and the first downlink reception includes a first association relationship, and the first association relationship is an association relationship between the first uplink signal and the first downlink reception in frequency domain.

Optionally, the association relationship is configured by the network side device or stipulated by a protocol.

Optionally, the first uplink signal includes first indication information, the first indication information is used to trigger M first downlink receptions in N downlink receptions, the N downlink receptions are configured by the network side device or stipulated by a protocol, and both N and M are integers greater than or equal to 1.

Optionally, the first indication information includes at least one of an identifier of the first downlink reception and a frequency domain configuration parameter of the first downlink reception.

Optionally, a frequency domain configuration parameter of the first downlink reception is configured by the network side device or stipulated by a protocol.

Optionally, the frequency domain configuration parameter of the first downlink reception includes at least one of the following:
a frequency domain location of the first downlink reception;
a first timer of the first downlink reception, where a BWP in which the first downlink reception is located remains unchanged during running of the first timer;
a carrier;
a bandwidth part BWP;
a control resource set CORESET;
a search space group;
a search space;
a parameter set;
a BWP bandwidth;
a virtual resource block VRB to physical resource block PRB resource mapping manner;
a PRB bundle size;
a frequency domain resource allocation type;
the number of transmit antennas or transmit channels;
the number of downlink multiple-input multiple-output MIMO layers;
simultaneously activated downlink component carriers;
a maximum supported downlink transmission rate;
a quasi co-located type D of a physical downlink control channel PDCCH;
an antenna port of the PDCCH;
an antenna port of a physical downlink shared channel PDSCH;
multiple transmission and reception point MTRP transmission; and
a precoding resource block group PRG size.

Optionally, the frequency domain location of the first downlink reception is indicated by a bitmap; or
the frequency domain location of the first downlink reception is indicated by a frequency domain start location and a frequency domain duration length.

Optionally, the first timer starts after a random access RACH process ends; or
the first timer starts after the terminal receives an acknowledgment message of the network side device.

Optionally, the network side device 500 further includes:
a first sending module, configured to send a first message to the terminal, where the first message includes a BWP switching instruction.

Optionally, the network side device 500 further includes:
a second sending module, configured to send a second message to the terminal, where the second message is used to instruct to stop the first timer.

Optionally, the network side device 500 further includes:
a second receiving module configured to receive second indication information sent by the terminal, where the second indication information is used to indicate that switching occurs in an uplink BWP.

Optionally, the association relationship further includes a second association relationship, and the second association relationship is an association relationship between the first uplink signal and the first downlink reception in time domain.

Optionally, the association relationship is configured for at least one of a specific terminal, a specific Media Access Control MAC entity, a specific service type, and a specific frequency range.

Optionally, the type of the first uplink signal includes at least one of a type of an uplink channel and a type of a signal carried on the uplink channel.

Optionally, the first downlink reception includes at least one of a downlink scheduling information reception, a downlink signal reception, a downlink data information reception, and a downlink channel monitoring.

Optionally, the network side device 500 further includes:
a third sending module, configured to send a third message to the terminal, where the third message is used to instruct the terminal to stop receiving at least one downlink reception in the first downlink reception.

It should be noted that the network side device 500 in this embodiment of the present invention may be the network side device in any implementation in the method embodiment and any implementation of the network side device in the method embodiment may be implemented by the network side device 500 in this embodiment of the present invention, and a same beneficial effect is achieved. To avoid repetition, details are not described herein again.

FIG. 14 is a schematic diagram of a hardware structure of a terminal according to the embodiments of the present invention. A terminal 900 includes but is not limited to components such as a radio frequency unit 901, a network module 902, an audio output unit 903, an input unit 904, a sensor 905, a display unit 906, a user input unit 907, an interface unit 908, a memory 909, a processor 910, and a power supply 911. It can be understood by a person skilled in the art that, the terminal structure shown in FIG. 14 does not constitute any limitation on the terminal, and the terminal may include more or fewer components than those shown in the figure, or combine some components, or have different component arrangements. In this embodiment of the present invention, the terminal includes but is not limited to a mobile phone, a tablet computer, a notebook computer, a palmtop computer, an in-vehicle terminal, a wearable device, a pedometer, and the like.

The radio frequency unit 901 is configured to:
send a first uplink signal, where the first uplink signal is used to trigger a first downlink reception, an association relationship between the first uplink signal and the first downlink reception includes a first association relationship, and the first association relationship is an association relationship between the first uplink signal and the first downlink reception in frequency domain.

Optionally, the association relationship is configured by a network side device or stipulated by a protocol.

Optionally, the radio frequency unit 901 or the processor 910 is further configured to:
trigger, according to at least one of a frequency range of the first uplink signal, a type of the first uplink signal, a logical channel on which the first uplink signal is located, and a service priority of the first uplink signal, the first downlink reception associated with the first uplink signal.

Optionally, the first uplink signal includes first indication information, the first indication information is used to trigger M first downlink receptions in N downlink receptions, the N downlink receptions are configured by a network side device or stipulated by a protocol, and both N and M are integers greater than or equal to 1.

Optionally, in a case that M is greater than 1, the radio frequency unit 901 is further configured to:
after the first uplink signal is sent, receive first downlink control information DCI; and
the radio frequency unit 901 or the processor 910 is further configured to:
   trigger K first downlink receptions in the M first downlink receptions by using the first DCI, where K is an integer greater than or equal to 1.

Optionally, the first indication information includes at least one of an identifier of the first downlink reception and a frequency domain configuration parameter of the first downlink reception.

Optionally, a frequency domain configuration parameter of the first downlink reception is configured by a network side device or stipulated by a protocol.

Optionally, the frequency domain configuration parameter of the first downlink reception includes at least one of the following:
a frequency domain location of the first downlink reception;
a first timer of the first downlink reception, where a BWP in which the first downlink reception is located remains unchanged during running of the first timer;
a carrier;
a bandwidth part BWP;
a control resource set CORESET;
a search space group;
a search space;
a parameter set;
a BWP bandwidth;
a virtual resource block VRB to physical resource block PRB resource mapping manner;
a PRB bundle size;
a frequency domain resource allocation type;
the number of transmit antennas or transmit channels;
the number of downlink multiple-input multiple-output MIMO layers;
simultaneously activated downlink component carriers;
a maximum supported downlink transmission rate;
a quasi co-located type D of a physical downlink control channel PDCCH;
an antenna port of the PDCCH;
an antenna port of a physical downlink shared channel PDSCH;
multiple transmission and reception point MTRP transmission; and
a precoding resource block group PRG size.

Optionally, the frequency domain location of the first downlink reception is indicated by a bitmap; or
the frequency domain location of the first downlink reception is indicated by a frequency domain start location and a frequency domain duration length.

Optionally, the first timer starts after a random access RACH process ends; or
the first timer starts after the terminal receives an acknowledgment message of the network side device.

Optionally, the radio frequency unit 901 or the processor 910 is further configured to:
in a case that the terminal sends a second uplink signal during running of the first timer of the first downlink reception, and the second uplink signal is used to trigger a second downlink reception, start or restart the first timer after sending the second uplink signal; or
in a case that the terminal receives a first message sent by the network side device, start or restart the first timer, where the first message includes a BWP switching instruction.

Optionally, the radio frequency unit 901 or the processor 910 is further configured to perform at least one of the following:
in a case that the terminal triggers a third downlink reception by using a third uplink signal, stopping the first timer after the third downlink reception takes effect; and
in a case that a second message sent by the network side device is received, and the second message is used to instruct to stop the first timer, stopping the first timer.

Optionally, in a case that the first timer times out, the radio frequency unit 901 or the processor 910 is further configured to:
switch the BWP in which the first downlink reception is located to a first BWP; or
deactivate the BWP in which the first downlink reception is located.

Optionally, the radio frequency unit 901 or the processor 910 is further configured to:
switch a BWP in which the first uplink signal is located to an uplink BWP corresponding to the BWP to which the first downlink reception is switched.

Optionally, the radio frequency unit 901 is further configured to:
send second indication information to a network side device on the BWP to which the first uplink signal is switched, where the second indication information is used to indicate that switching occurs in an uplink BWP.

Optionally, the association relationship further includes a second association relationship, and the second association relationship is an association relationship between the first uplink signal and the first downlink reception in time domain.

Optionally, the association relationship is configured for at least one of a specific terminal, a specific Media Access Control MAC entity, a specific service type, and a specific frequency range.

Optionally, the type of the first uplink signal includes at least one of a type of an uplink channel and a type of a signal carried on the uplink channel.

Optionally, the first downlink reception includes at least one of a downlink scheduling information reception, a downlink signal reception, a downlink data information reception, and a downlink channel monitoring.

Optionally, the radio frequency unit 901 is further configured to:
receive a third message sent by a network side device, where the third message is used to instruct the terminal to stop receiving at least one downlink reception in the first downlink reception.

Optionally, in a case that the terminal sends a second uplink signal within duration of the first downlink reception, and the second uplink signal is used to trigger a second downlink reception, the radio frequency unit 901 is further configured to:
concurrently perform the first downlink reception and the second downlink reception; or
perform only the second downlink reception.

Optionally, in a case that the first downlink reception and the second downlink reception are concurrently performed, in a case that one or more resource conflicts occur on the first downlink reception and the second downlink reception" and the resource conflict includes at least one of a time domain resource conflict and a frequency domain resource conflict, the radio frequency unit 901 or the processor 910 is further configured to:
perform the second downlink reception on a conflicted resource, and abandon the first downlink reception; or
perform the first downlink reception on a conflicted resource, and abandon the second downlink reception; or
on a conflicted resource, determine a to-be-performed downlink reception from the first downlink reception and the second downlink reception according to at least one of types of the first uplink signal and the second uplink signal, logical channels on which the first uplink signal and the second uplink signal are located, and service priorities of the first uplink signal and the second uplink signal.

Optionally, the first downlink reception includes a plurality of downlink receptions, and each downlink reception corresponds to one downlink reception type.

It should be noted that the terminal 900 in this embodiment may be the terminal in any implementation in the method embodiment in the embodiments of the present invention, and any implementation of the terminal in the method embodiment in the embodiments of the present invention may be implemented by the terminal 900 in this embodiment, and a same beneficial effect is achieved. Details are not described herein again.

It should be understood that, in this embodiment of the present invention, the radio frequency unit 901 may be configured to receive and send information or a signal in a call process. Specifically, after receiving downlink data from a base station, the radio frequency unit 901 sends the downlink data to the processor 910 for processing. In addition, the radio frequency unit 901 sends uplink data to the base station. Usually, the radio frequency unit 901 includes but is not limited to an antenna, at least one amplifier, a transceiver, a coupler, a low noise amplifier, a duplexer, and the like. In addition, the radio frequency unit 901 may communicate with a network and another device through a wireless communication system.

The terminal provides wireless broadband Internet access for the user by using the network module 902, for example, helping the user to send and receive an e-mail, brows a web page, and access streaming media.

The audio output unit 903 may convert audio data received by the radio frequency unit 901 or the network module 902 or stored in the memory 909 into an audio signal and output the audio signal as a sound. In addition, the audio output unit 903 may further provide an audio output (for example, a call signal received voice, or a message received voice) related to a specific function implemented by the terminal 900. The audio output unit 903 includes a speaker, a buzzer, a telephone receiver, and the like.

The input unit 904 is configured to receive an audio signal or a video signal. The input unit 904 may include a graphics processing unit (Graphics Processing Unit, GPU) 9041 and a microphone 9042, and the graphics processing unit 9041 processes image data of a still picture or video obtained by an image capture apparatus (such as a camera) in a video capture mode or an image capture mode. A processed image frame may be displayed on the display unit 906. The image frame processed by the graphics processing unit 9041 may be stored in the memory 909 (or another storage medium) or sent by using the radio frequency unit 901 or the network module 902. The microphone 9042 may receive a sound and can process such sound into audio data. Processed audio data may be converted, in a call mode, into a format that can be sent to a mobile communication base station by using the radio frequency unit 901 for output.

The terminal 900 further includes at least one type of sensor 905, such as a light sensor, a motion sensor, and another sensor. Specifically, the light sensor includes an ambient light sensor and a proximity sensor. The ambient light sensor may adjust luminance of the display panel 9061 based on brightness of ambient light. The proximity sensor may turn off the display panel 9061 and backlight when the terminal 900 moves to an ear. As a type of the motion sensor, an accelerometer sensor may detect an acceleration value in each direction (generally, three axes), and detect a value and a direction of gravity when the accelerometer sensor is static, and may be used for recognizing a terminal posture (such as screen switching between landscape and portrait modes, a related game, or magnetometer posture calibration), a function related to vibration recognition (such as a pedometer or a knock), and the like. The sensor 905 may further include a fingerprint sensor, a pressure sensor, an iris sensor, a molecular sensor, a gyroscope, a barometer, a hygrometer, a thermometer, an infrared sensor, and the like. Details are not described herein.

The display unit 906 is configured to display information entered by a user or information provided for a user. The display unit 906 may include a display panel 9061. The display panel 9061 may be configured in a form of a liquid crystal display (Liquid Crystal Display, LCD), an organic light-emitting diode (Organic Light-Emitting Diode, OLED), or the like.

The user input unit 907 may be configured to receive input numeral or character information, and generate key signal input related to user setting and functional control of the terminal. Specifically, the user input unit 907 includes a touch panel 9071 and another input device 9072. The touch panel 9071 is also referred to as a touchscreen, and may collect a touch operation performed by a user on or near the touch panel 9071 (such as an operation performed by a user on the touch panel 9071 or near the touch panel 9071 by using any proper object or accessory, such as a finger or a stylus). The touch panel 9071 may include two parts: a touch detection apparatus and a touch controller. The touch detection apparatus detects a touch position of the user, detects a signal brought by the touch operation, and sends the signal to the touch controller. The touch controller receives touch information from the touch detection apparatus, converts the touch information into touch point coordinates, and sends the touch point coordinates to the processor 910, and can receive and execute a command sent by the processor 910. In addition, the touch panel 9071 may be of a resistive type, a capacitive type, an infrared type, a surface acoustic wave type, or the like. The user input unit 907 may include another input device 9072 in addition to the touch panel 9071. Specifically, the another input device 9072 may include but is not limited to a physical keyboard, a functional button (such as a volume control button or a power on/off button), a trackball, a mouse, and a joystick. Details are not described herein.

Further, the touch panel 9071 may cover the display panel 9061. When detecting the touch operation on or near the touch panel 9071, the touch panel 9071 transmits the touch operation to the processor 910 to determine a type of a touch event, and then the processor 910 provides corresponding visual output on the display panel 9061 based on the type of the touch event. In FIG. 14, although the touch panel 9071 and the display panel 9061 are used as two independent parts to implement input and output functions of the terminal, in some embodiments, the touch panel 9071 and the display panel 9061 may be integrated to implement the input and output functions of the terminal. This is not specifically limited herein.

The interface unit 908 is an interface for connecting an external apparatus with the terminal 900. For example, the external apparatus may include a wired or wireless headphone port, an external power supply (or a battery charger) port, a wired or wireless data port, a storage card port, a port used to connect to an apparatus having an identity module, an audio input/output (I/O) port, a video I/O port, a headset port, and the like. The interface unit 908 may be configured to receive input (for example, data information and power) from an external apparatus and transmit the received input to one or more elements in the terminal 900 or may be configured to transmit data between the terminal 900 and an external apparatus.

The memory 909 may be configured to store a software program and various data. The memory 909 may mainly include a program storage area and a data storage area. The program storage area may store an operating system, an application required by at least one function (such as a sound play function or an image play function), and the like. The data storage area may store data (such as audio data or an address book) created based on use of the mobile phone, and the like. In addition, the memory 909 may include a high-speed random access memory, and may further include a nonvolatile memory, for example, at least one magnetic disk storage device, a flash storage device, or another volatile solid-state storage device.

The processor 910 is a control center of the terminal, and connects all parts of the entire terminal by using various interfaces and lines. By running or executing a software program and a module stored in the memory 909 and invoking data stored in the memory 909, the processor 910 performs various functions of the terminal and data processing, to perform overall monitoring on the terminal. The processor 910 may include one or more processing units. Preferably, an application processor and a modem processor may be integrated into the processor 910. The application processor mainly processes an operating system, a user interface, an application, and the like. The modem processor mainly processes wireless communications. It can be understood that, alternatively, the modem processor may not be integrated into the processor 910.

The terminal 900 may further include the power supply 911 (such as a battery) that supplies power to each component. Preferably, the power supply 911 may be logically connected to the processor 910 by using a power management system, so as to implement functions such as charging, discharging, and power consumption management by using the power management system.

In addition, the terminal 900 includes some function modules not shown, and details are not described herein.

Preferably, an embodiment of the present invention further provides a terminal, including a processor 910, a memory 909, and an instruction or a program that is stored in the memory 909 and that can be run on the processor 910. When the instruction or the program is executed by the processor 910, the processes of the downlink reception triggering method embodiment are implemented and a same technical effect can be achieved. To avoid repetition, details are not described herein again.

It should be noted that the terminal 900 in this embodiment may be the terminal in any implementation in the method embodiment in the embodiments of the present invention, and any implementation of the terminal in the method embodiment in the embodiments of the present invention may be implemented by the terminal 900 in this embodiment, and a same beneficial effect is achieved. Details are not described herein again.

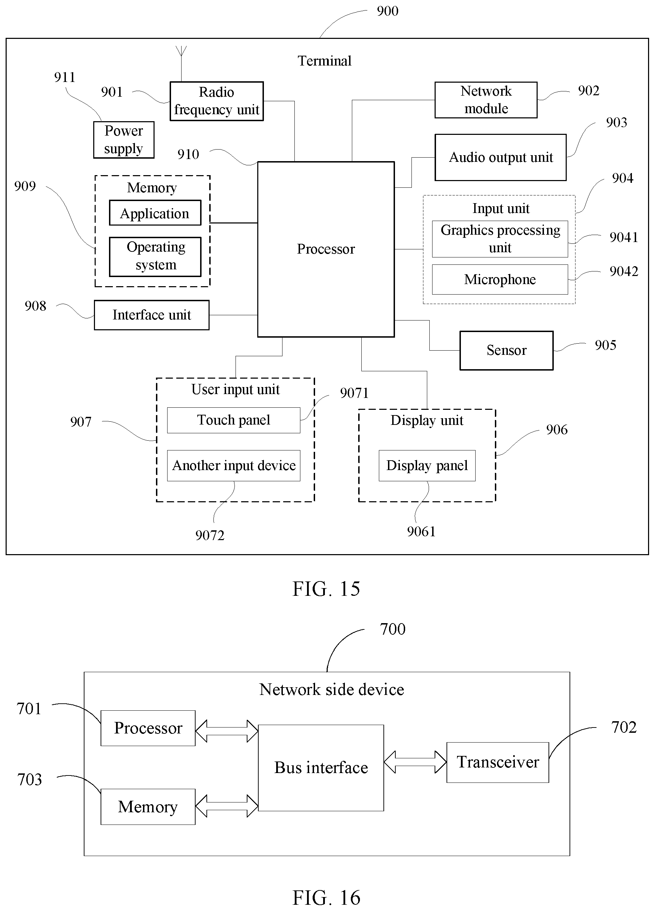

FIG. 15 is a structural diagram of a network side device according to an embodiment of the present invention. As shown in FIG. 15, a network side device 700 includes a processor 701, a transceiver 702, a memory 703, and a bus interface.

The transceiver 702 is configured to:
receive a first uplink signal sent by a terminal, where the first uplink signal is used to trigger a first downlink reception, an association relationship between the first uplink signal and the first downlink reception includes a first association relationship, and the first association relationship is an association relationship between the first uplink signal and the first downlink reception in frequency domain.

Optionally, the association relationship is configured by the network side device or stipulated by a protocol.

Optionally, the first uplink signal includes first indication information, the first indication information is used to trigger M first downlink receptions in N downlink receptions, the N downlink receptions are configured by the network side device or stipulated by a protocol, and both N and M are integers greater than or equal to 1.

Optionally, the first indication information includes at least one of an identifier of the first downlink reception and a frequency domain configuration parameter of the first downlink reception.

Optionally, a frequency domain configuration parameter of the first downlink reception is configured by the network side device or stipulated by a protocol.

Optionally, the frequency domain configuration parameter of the first downlink reception includes at least one of the following:
a frequency domain location of the first downlink reception;
a first timer of the first downlink reception, where a BWP in which the first downlink reception is located remains unchanged during running of the first timer;
a carrier;
a bandwidth part BWP;
a control resource set CORESET;
a search space group;
a search space;
a parameter set;
a BWP bandwidth;
a virtual resource block VRB to physical resource block PRB resource mapping manner;
a PRB bundle size;
a frequency domain resource allocation type;
the number of transmit antennas or transmit channels;
the number of downlink multiple-input multiple-output MIMO layers;
simultaneously activated downlink component carriers;
a maximum supported downlink transmission rate;
a quasi co-located type D of a physical downlink control channel PDCCH;
an antenna port of the PDCCH;
an antenna port of a physical downlink shared channel PDSCH;
multiple transmission and reception point MTRP transmission; and
a precoding resource block group PRG size.

Optionally, the frequency domain location of the first downlink reception is indicated by a bitmap; or
the frequency domain location of the first downlink reception is indicated by a frequency domain start location and a frequency domain duration length.

Optionally, the first timer starts after a random access RACH process ends; or
the first timer starts after the terminal receives an acknowledgment message of the network side device.

Optionally, the transceiver 702 is further configured to:
send a first message to the terminal, where the first message includes a BWP switching instruction.

Optionally, the transceiver 702 is further configured to:
send a second message to the terminal, where the second message is used to instruct to stop the first timer.

Optionally, the transceiver 702 is further configured to:
receive second indication information sent by the terminal, where the second indication information is used to indicate that switching occurs in an uplink BWP.

Optionally, the association relationship further includes a second association relationship, and the second association relationship is an association relationship between the first uplink signal and the first downlink reception in time domain.

Optionally, the association relationship is configured for at least one of a specific terminal, a specific Media Access Control MAC entity, a specific service type, and a specific frequency range.

Optionally, the type of the first uplink signal includes at least one of a type of an uplink channel and a type of a signal carried on the uplink channel.

Optionally, the first downlink reception includes at least one of a downlink scheduling information reception, a downlink signal reception, a downlink data information reception, and a downlink channel monitoring.

Optionally, the transceiver 702 is further configured to:
send a third message to the terminal, where the third message is used to instruct the terminal to stop receiving at least one downlink reception in the first downlink reception.

In FIG. 15, a bus architecture may include any quantity of interconnected buses and bridges. Specifically, various circuits of one or more processors represented by the processor 701 and a memory represented by the memory 703 are interconnected. The bus architecture may further link various other circuits such as a peripheral device, a voltage regulator, and a power management circuit. These are well known in the art, and therefore are not further described in this specification. A bus interface provides an interface. The transceiver 702 may be a plurality of components. To be specific, the transceiver 702 includes a transmitter and a receiver, and provides a unit configured to communicate with various other apparatuses on a transmission medium.

The processor 701 is responsible for bus architecture management and general processing. The memory 703 may store data used by the processor 701 when the processor 701 performs an operation.

It should be noted that the network side device 700 in this embodiment may be the network side device in any implementation in the method embodiment in the embodiments of the present invention, and any implementation of the network side device in the method embodiment in the embodiments of the present invention may be implemented by the network side device 700 in this embodiment, and a same beneficial effect is achieved. Details are not described herein again.

An embodiment of the present invention further provides a readable storage medium. The readable storage medium stores an instruction or a program, and when the instruction or the program is executed by a processor, the foregoing processes of the embodiment corresponding to the terminal or the network side are implemented and a same technical effect can be achieved. To avoid repetition, details are not described herein again. The readable storage medium is, for example, a read-only memory (Read-only Memory, ROM), a random access memory (Random Access Memory, RAM), a magnetic disk, or an optical disc.

An embodiment of the present invention further provides a chip, where the chip includes a processor and a communications interface, the communications interface is coupled to the processor, and the processor is configured to run a program or an instruction to implement the processes of the foregoing downlink reception triggering method embodiment, and a same technical effect can be achieved. To avoid repetition, details are not described herein again.

It should be understood that the chip mentioned in this embodiment of the present invention may also be referred to as a system-level chip, a system chip, a chip system, or an on-chip system chip.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of the present invention essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of the present invention.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A downlink reception triggering method, applied to a terminal, wherein the method comprises:
sending a first uplink signal, wherein the first uplink signal is used to trigger a first downlink reception, an association relationship between the first uplink signal and the first downlink reception comprises a first association relationship, and the first association relationship is an association relationship between the first uplink signal and the first downlink reception in frequency domain.

2. The method according to claim 1, wherein the association relationship is configured by a network side device or stipulated by a protocol.

3. The method according to claim 2, further comprising:
triggering, according to at least one of a frequency range of the first uplink signal, a type of the first uplink signal, a logical channel on which the first uplink signal is located, and a service priority of the first uplink signal, the first downlink reception associated with the first uplink signal.

4. The method according to claim 1, wherein the first uplink signal comprises first indication information, the first indication information is used to trigger M first downlink receptions in N downlink receptions, the N downlink receptions are configured by a network side device or stipulated by a protocol, and both N and M are integers greater than or equal to 1.

5. The method according to claim 4, wherein in a case that M is greater than 1, the method further comprises:
after the first uplink signal is sent, receiving first downlink control information DCI; and
triggering K first downlink receptions in the M first downlink receptions by using the first DCI, wherein K is an integer greater than or equal to 1.

6. The method according to claim 2, wherein the first indication information comprises at least one of an identifier of the first downlink reception and a frequency domain configuration parameter of the first downlink reception.

7. The method according to claim 1, wherein a frequency domain configuration parameter of the first downlink reception is configured by a network side device or stipulated by a protocol.

8. The method according to claim 6 or 7, wherein the frequency domain configuration parameter of the first downlink reception comprises at least one of the following:
a frequency domain location of the first downlink reception;
a first timer of the first downlink reception, wherein a BWP in which the first downlink reception is located remains unchanged during running of the first timer;
a carrier;
a bandwidth part BWP;
a control resource set CORESET;
a search space group;
a search space;
a parameter set;
a BWP bandwidth;
a virtual resource block VRB to physical resource block PRB resource mapping manner;
a PRB bundle size;
a frequency domain resource allocation type;
the number of transmit antennas or transmit channels;
the number of downlink multiple-input multiple-output MIMO layers;
simultaneously activated downlink component carriers;
a maximum supported downlink transmission rate;
a quasi co-located type D of a physical downlink control channel PDCCH;
an antenna port of the PDCCH;
an antenna port of a physical downlink shared channel PDSCH;
multiple transmission and reception point MTRP transmission; and
a precoding resource block group PRG size.

9. The method according to claim 8, wherein the frequency domain location of the first downlink reception is indicated by a bitmap; or
the frequency domain location of the first downlink reception is indicated by a frequency domain start location and a frequency domain duration length.

10. The method according to claim 8, wherein the first timer starts after a random access RACH process ends; or
the first timer starts after the terminal receives an acknowledgment message of the network side device.

11. The method according to claim 8, further comprising:
in a case that the terminal sends a second uplink signal during running of the first timer of the first downlink reception, and the second uplink signal is used to trigger a second downlink reception, starting or restarting the first timer after sending the second uplink signal; or
in a case that the terminal receives a first message sent by the network side device, starting or restarting the first timer, wherein the first message comprises a BWP switching instruction.

12. The method according to claim 8, further comprising at least one of the following:
in a case that the terminal triggers a third downlink reception by using a third uplink signal, stopping the first timer after the third downlink reception takes effect; and
in a case that a second message sent by the network side device is received, and the second message is used to instruct to stop the first timer, stopping the first timer.

13. The method according to claim 8, wherein in a case that the first timer times out, the method further comprises:
switching the BWP in which the first downlink reception is located to a first BWP; or
deactivating the BWP in which the first downlink reception is located.

14. The method according to claim 1 or 13, further comprising:
switching a BWP in which the first uplink signal is located to an uplink BWP corresponding to the BWP to which the first downlink reception is switched.

15. The method according to claim 14, further comprising:
sending second indication information to a network side device on the BWP to which the first uplink signal is switched, wherein the second indication information is used to indicate that switching occurs in an uplink BWP.

16. The method according to any one of claims 1 to 6, wherein the association relationship further comprises a second association relationship, and the second association relationship is an association relationship between the first uplink signal and the first downlink reception in time domain.

17. The method according to claim 1, wherein the association relationship is configured for at least one of a specific terminal, a specific Media Access Control MAC entity, a specific service type, and a specific frequency range.

18. The method according to claim 1 or 3, wherein the type of the first uplink signal comprises at least one of a type of an uplink channel and a type of a signal carried on the uplink channel.

19. The method according to claim 1, wherein the first downlink reception comprises at least one of a downlink scheduling information reception, a downlink signal reception, a downlink data information reception, and a downlink channel monitoring.

20. The method according to claim 1, further comprising:
receiving a third message sent by a network side device, wherein the third message is used to instruct the terminal to stop receiving at least one downlink reception in the first downlink reception.

21. The method according to claim 1, wherein in a case that the terminal sends a second uplink signal within duration of the first downlink reception, and the second uplink signal is used to trigger a second downlink reception, the method further comprises:
concurrently performing the first downlink reception and the second downlink reception; or
performing only the second downlink reception.

22. The method according to claim 21, wherein in a case that the first downlink reception and the second downlink reception are concurrently performed, in a case that one or more resource conflicts occur on the first downlink reception and the second downlink reception, the method further comprises:
performing the second downlink reception on a conflicted resource, and abandoning the first downlink reception; or
performing the first downlink reception on a conflicted resource, and abandoning the second downlink reception; or
on a conflicted resource, determining a to-be-performed downlink reception from the first downlink reception and the second downlink reception according to at least one of types of the first uplink signal and the second uplink signal, logical channels on which the first uplink signal and the second uplink signal are located, and service priorities of the first uplink signal and the second uplink signal.

23. A downlink reception triggering method, applied to a network side device, wherein the method comprises:
receiving a first uplink signal sent by a terminal, wherein the first uplink signal is used to trigger a first downlink reception, an association relationship between the first uplink signal and the first downlink reception comprises a first association relationship, and the first association relationship is an association relationship between the first uplink signal and the first downlink reception in frequency domain.

24. The method according to claim 23, wherein the association relationship is configured by the network side device or stipulated by a protocol.

25. The method according to claim 23, wherein the first uplink signal comprises first indication information, the first indication information is used to trigger M first downlink receptions in N downlink receptions, the N downlink receptions are configured by the network side device or stipulated by a protocol, and both N and M are integers greater than or equal to 1.

26. The method according to any one of claims 23 to 25, wherein the association relationship further comprises a second association relationship, and the second association relationship is an association relationship between the first uplink signal and the first downlink reception in time domain.

27. The method according to claim 23, further comprising:
sending a third message to the terminal, wherein the third message is used to instruct the terminal to stop receiving at least one downlink reception in the first downlink reception.

28. A terminal, comprising:
a first sending module, configured to send a first uplink signal, wherein the first uplink signal is used to trigger a first downlink reception, an association relationship between the first uplink signal and the first downlink reception comprises a first association relationship, and the first association relationship is an association relationship between the first uplink signal and the first downlink reception in frequency domain.

29. The terminal according to claim 28, wherein the association relationship is configured by a network side device or stipulated by a protocol.

30. The terminal according to claim 28, wherein the first uplink signal comprises first indication information, the first indication information is used to trigger M first downlink receptions in N downlink receptions, the N downlink receptions are configured by a network side device or stipulated by a protocol, and both N and M are integers greater than or equal to 1.

31. The terminal according to any one of claims 28 to 30, wherein the association relationship further comprises a second association relationship, and the second association relationship is an association relationship between the first uplink signal and the first downlink reception in time domain.

32. A network side device, comprising:
a first receiving module, configured to receive a first uplink signal sent by a terminal, wherein the first uplink signal is used to trigger a first downlink reception, an association relationship between the first uplink signal and the first downlink reception comprises a first association relationship, and the first association relationship is an association relationship between the first uplink signal and the first downlink reception in frequency domain.

33. The network side device according to claim 32, wherein the association relationship is configured by the network side device or stipulated by a protocol.

34. The network side device according to claim 32, wherein the first uplink signal comprises first indication information, the first indication information is used to trigger M first downlink receptions in N downlink receptions, the N downlink receptions are configured by the network side device or stipulated by a protocol, and both N and M are integers greater than or equal to 1.

35. The network side device according to any one of claims 32 to 34, wherein the association relationship further comprises a second association relationship, and the second association relationship is an association relationship between the first uplink signal and the first downlink reception in time domain.

36. A terminal, comprising a memory, a processor, and an instruction or a program that is stored in the memory and that can be run on the processor, wherein when the instruction or the program is executed by the processor, the steps of the downlink reception triggering method according to any one of claims 1 to 22 are implemented.

37. A network side device, comprising a memory, a processor, and an instruction or a program that is stored in the memory and that can be run on the processor, wherein when the instruction or the program is executed by the processor, the steps of the downlink reception triggering method according to any one of claims 23 to 27 are implemented.

38. A readable storage medium, wherein the readable storage medium stores an instruction or a program, and when the instruction or the program is executed by a processor, the steps of the downlink reception triggering method according to any one of claims 1 to 22 or the steps of the downlink reception triggering method according to any one of claims 23 to 27 are implemented.

39. A chip, comprising a processor and a communications interface, wherein the communications interface is coupled to the processor, and the processor is configured to run a program or an instruction to implement the steps of the downlink reception triggering method according to any one of claims 1 to 22 or the steps of the downlink reception triggering method according to any one of claims 23 to 27.

40. A computer program product, wherein the program product is stored in a non-volatile storage medium, and the program product is executed by at least one processor to implement the steps of the downlink reception triggering method according to any one of claims 1 to 22 or the steps of the downlink reception triggering method according to any one of claims 23 to 27.

41. A terminal, wherein the terminal is configured to perform the downlink reception triggering method according to any one of claims 1 to 22.

42. A network side device, wherein the network side device is configured to perform the downlink reception triggering method according to any one of claims 23 to 27.
